# EUROPÄISCHE PATENTSCHRIFT

(11) **EP 3 036 243 B1**
(45) Veröffentlichungstag und Bekanntmachung des Hinweises auf die Patenterteilung: **09.10.2019**
(21) Anmeldenummer: 14758104.5
(22) Anmeldetag: 18.08.2014
(51) Int. Cl.: C07F 5/00

(54) **VERFAHREN ZUR HERSTELLUNG VON ALKYLINDIUM-VERBINDUNGEN UND DEREN VERWENDUNG**
METHOD FOR PRODUCING ALKYL-INDIUM COMPOUNDS AND THE USE THEREOF
PROCÉDÉ DE PRODUCTION DE COMPOSÉS ALKYLINDIUM ET UTILISATION DESDITS COMPOSÉS

(30) Priorität: 22.08.2013 DE 102013216637; 08.08.2014 DE 102014111376
(43) Veröffentlichungstag der Anmeldung: 29.06.2016
(73) Patentinhaber: Umicore AG & Co. KG, 63457 Hanau-Wolfgang (DE)
(72) Erfinder: SUNDERMEYER, Joerg, 35041 Marburg (DE); FREY, Annika, 63457 Hanau (DE); SCHORN, Wolf, 76337 Waldbronn (DE); KARCH, Ralf, D-63801 Kleinostheim (DE); RIVAS-NASS, Andreas, 64625 Bensheim (DE); WOERNER, Eileen, 61130 Nidderau (DE); DOPPIU, Angelino, 63500 Seligenstadt (DE)
(86) Internationale Anmeldenummer: PCT/EP2014/067547
(87) Internationale Veröffentlichungsnummer: WO 2015/024894

(56) Entgegenhaltungen:
- WO-A1-89/05303
- STOLL S L ET AL: "SELENIDE AND SELENOLATE COMPOUNDS OF INDIUM: A COMPARATIVE STUDY OF IN-SE BOND-FORMING REACTIONS", JOURNAL OF THE CHEMICAL SOCIETY, DALTON TRANSACTIONS, CHEMICAL SOCIETY. LETCHWORTH, GB, 1. Januar 1997 (1997-01-01), Seiten 1315-1321, XP001146779, ISSN: 1472-7773, DOI: 10.1039/A606755G
- KONRAD KOSZINOWSKI: "Oxidation State, Aggregation, and Heterolytic Dissociation of Allyl Indium Reagents", JOURNAL OF THE AMERICAN CHEMICAL SOCIETY, Bd. 132, Nr. 17, 5. Mai 2010 (2010-05-05), Seiten 6032-6040, XP55151064, ISSN: 0002-7863, DOI: 10.1021/ja908101j
- O. T. Beachley ET AL: "Indium(III) compounds containing the neopentyl substituent, In(CH2CMe3)3, In(CH2CMe3)2Cl, In(CH2CMe3)Cl2, and In(CH2CMe3)2CH3. Crystal and molecular structure of dichloroneopentyl indium(III), an inorganic polymer", Organometallics, vol. 8, no. 8, 1 August 1989 (1989-08-01), pages 1915-1921, XP055069174, ISSN: 0276-7333, DOI: 10.1021/om00110a014

## Beschreibung

Gegenstand der Erfindung ist ein Verfahren zur Herstellung von Alkylindiumsesquichlorid gekennzeichnet durch die allgemeine Formel R₃In₂Cl₃ (nachfolgend auch als Verbindung (A) bezeichnet) in hoher Ausbeute sowie mit hoher Selektivität und Reinheit.

Das erfindungsgemäß hergestellte Alkylindiumsesquichlorid eignet sich, auch aufgrund der hohen Reinheit und Ausbeute, besonders zur bedarfsgerechten Herstellung Indium-haltiger Präkursor, bevorzugt solcher der allgemeinen Formel R₃In (nachfolgend auch als Verbindung (B) bezeichnet) oder R₂InR' (nachfolgend auch als Verbindung (C) bezeichnet). Die mit hoher Ausbeute und in hoher Reinheit aus Verbindung (A) erhältlichen Indium-haltigen Präkursoren sind besonders geeignet für die metallorganische chemische Gasphasenabscheidung (MOCVD; metal organic chemical vapour deposition, auch bekannt als metallorganische Gasphasenepitaxie (MOVPE; metal organic chemical vapor phase epitaxy)).

Sofern gemäß dieser Erfindung der Begriff "Verfahren" verwendet wird, ist damit immer das Verfahren zur Herstellung der Verbindung (A) und das darauf aufsetzende optionale Verfahren zur Herstellung Indium-haltiger Präkursoren, vorzugsweise der Verbindungen (B) oder (C), gemeint.

### Stand der Technik

Im Stand der Technik sind verschiedene Verfahren zur Herstellung von Verbindungen, die üblicherweise als metallorganische Präkursoren für MOCVD-Prozesse eingesetzt werden, beziehungsweise deren Vorstufen, nachfolgend vereinfacht als "Präkursor-Vorstufe" bezeichnet, beschrieben.

"Präkursor-Vorstufen" sind im Sinne dieser Erfindung solche, die durch weitere Reaktionsschritte zu den eigentlichen metallorganischen Präkursoren (kurz als "Präkursoren" oder "Indium-haltige Präkursoren" bezeichnet) umgesetzt werden können, die dann unmittelbar in MOCVD-Prozessen eingesetzt werden können. Dabei ist es vorteilhaft, solche Präkursor-Vorstufen bereitzustellen, beziehungsweise Präkursoren über solche Präkursor-Vorstufen herzustellen, die selbst mit hoher Selektivität und Ausbeute erhältlich sind. Zudem kann es sehr vorteilhaft sein, Präkursor-Vorstufen bereitzustellen, die einfach und mit hoher Reinheit herstellbar und gegebenenfalls isolierbar und ausreichend lagerstabil sind, um eine bedarfsgerechte und möglichst schnelle Herstellung von hochreinen Präkursoren für MOCVD- Prozesse zu ermöglichen. Die MOCVD- Prozesse werden insbesondere bei der Herstellung von Halbleiterschichten für optoelektronische Anwendungen wie Solarzellen oder LEDs, aber auch zur Herstellung von Schichten in anderen Anwendungsbereichen eingesetzt, was üblicherweise höchste Reinheit des jeweils verwendeten Präkursors, sowie die Abwesenheit beziehungsweise das Vorhandensein nur sehr geringer Anteile an insbesondere sauerstoffhaltigen Verunreinigungen erfordert.

So sind verschiedene Verfahren zur Herstellung beispielsweise von Indiumhaltigen, Gallium-haltigen oder auch Aluminium-haltigen Präkursoren oder entsprechenden Präkursor-Vorstufen bekannt. Die jeweiligen Verfahrensbedingungen sind allerdings nicht zwingend beziehungsweise nicht unverändert zwischen den Elementen übertragbar. Es ist zu berücksichtigen, dass die Elemente Aluminium, Gallium und Indium bereits ein unterschiedliches chemisches Verhalten zeigen, woraus sich regelmäßig der Bedarf einer jeweils angepassten, besonderen Verfahrensführung bei Herstellung jeweiliger Präkursoren ergibt.

Im Stand der Technik bekannte Verfahren zur Herstellung von Indium-haltigen Präkursoren beziehungsweise Präkursor-Vorstufen stoßen oft auf erhebliche Schwierigkeiten, wenn es um die Herstellung in der für übliche Verwendungen erforderlichen Reinheit und Menge, insbesondere auch zu vertretbaren Kosten, geht. So können die elektrischen Eigenschaften der aus Indium-haltigen Präkursoren über MOCVD hergestellten Halbleiterschichten durch Verunreinigungen in den Präkursoren oder Präkursor-Vorstufen erheblich nachteilig beeinträchtigt werden. Zahlreiche Herstellungsverfahren sind zudem sehr zeitaufwändig. Auch werden häufig nur geringe Ausbeuten erzielt und die Reaktionsschritte sind häufig durch eine verminderte Selektivität gekennzeichnet. Auch aufgrund der Verwendung organischer Lösungsmittel bei bekannten Herstellungsverfahren zur Herstellung von Indium-haltigen Präkursoren oder Präkursor-Vorstufen sind die Verfahren zumeist kostenintensiv, wenig umweltfreundlich und können mit Lösungsmittelresten in den Zwischenprodukten und den Endprodukten einhergehen, die wiederum deren Verwendung erheblich einschränken oder eine kostenintensive und aufwändige Aufreinigung erforderlich machen.

DE 37 42 525 A1 betrifft ein Verfahren zur Herstellung von Metallalkylen wie Trimethylindium, wobei eine Herstellung ausgehend von Lithiumtetramethylindat als Präkursor-Vorstufe durch Umsetzung mit Indiumtrichlorid beschrieben ist, in einem organischen Lösungsmittel. Es wird ein Gemisch erhalten, das Trimethylindium umfasst und das nachfolgend noch isoliert und gereinigt werden muss. Die Ausbeute ist selbst nach Aufreinigung mit lediglich 82% des theoretischen Wertes angegeben. Auch ist die Herstellung durch eine relativ hohe Verfahrensdauer von mehr als 24 Stunden gekennzeichnet.

EP 0 372 138 A1 beschreibt ein Verfahren zur Herstellung organometallischer Verbindungen, nach dem auch Trialkylindium-Verbindungen erhältlich sind, über eine nichtflüchtige Präkursor-Vorstufe, die beispielsweise Lithiumtetramethylindat sein kann. Die Herstellung von Lithiumtetramethylindat aus Indiumtrichlorid findet in Diethylether unter Zusatz von Methyllithium statt, was das Verfahren insgesamt sehr kostenintensiv gestaltet. Das Lithiumtetramethylindat wird mit Indiumtrichlorid zu Trimethylindium umgesetzt, welches nachfolgend noch aufgereinigt werden muss. Angaben zur tatsächlichen Ausbeute finden sich nicht.

Außerdem ist das beschriebene Verfahren sehr aufwändig, unter anderem infolge zahlreicher Isolierungs- und Aufreinigungsschritte.

Gynane et. al. beschreiben die Umsetzung von Indium mit Alkylbromiden und Alkyliodiden zu Sesquihalogeniden (Gynane, M. J. S, Waterworth, L. G. und Worrall, I. J., J. Organometal. Chem., 40, 1972). Auch in einer weiteren Veröffentlichung ist die Umsetzung von Indiummonobromid oder Indiummonoiodid mit Alkyliodiden oder Alkylbromiden zu Alkylindiumdihalogeniden beschrieben, wobei sehr lange Reaktionszeiten erforderlich sind (Gynane, M. J. S, Waterworth, L. G. und Worrall, I. J., J. Organometal. Chem., 43, 1972).

US 5,663,390 betrifft die Herstellung von Alkylmetallchloriden durch Umsetzung eines Alkylchlorids mit elementarem Metall in Gegenwart von H₂ als Reaktionsbeschleuniger. Letzteres ist jedoch nachteilig, insbesondere ist das beschriebene Verfahren sehr aufwändig und die Umsetzung erfolgt nur unvollständig. Die Reaktion ist insgesamt sehr aufwändig und kostenintensiv und eignet sich daher nicht für den industriellen Maßstab.

Koszinowski, Journal of the American Chemical Society 2010, 132(17), 6032-6040 zeigt ein Verfahren zur Herstellung von Allylindiumverbindungen der Formel R₃In₂X₃ mit R=allyl.

Beachley et al., Organometallics (1989) 8, 1915-1921, zeigt die Herstellung von Methyl-dineopentylindium durch Reaktion von Dineopentylindiumchlorid mit Methyllithium. Alkylindiumsesquichloride wird bei diesem Verfahren in keiner Weise verwendet.

### Aufgabe

Es ist eine Aufgabe der vorliegenden Erfindung ein Verfahren bereitzustellen, das eine bedarfsgerechte und kostengünstige Herstellung von geeigneten Präkursor-Vorstufen für Indium-haltige Präkursoren ermöglicht bei einfacher und schneller Prozessführung. Auch soll das Verfahren eine Herstellung solcher Verbindungen mit hoher Ausbeute und hoher Reinheit ermöglichen. Die Präkursor-Vorstufen sollen ferner einfach isolierbar und ausreichend lagerstabil sein.

Weiterhin sollen aus der Vorstufe erhältliche Indium-haltige Präkursoren möglichst frei von Sauerstoffverunreinigungen und in hoher Ausbeute und mit hoher Selektivität und Reinheit ausgehend von der Vorstufe erhältlich sein. Die erhältlichen Indium-haltigen Präkursoren sollen hierdurch besonders für MOCVD-Prozesse geeignet sein, was für die Herstellung von Halbleiterschichten jeweils hochreine Organoindiumverbindungen erfordert.

Das Verfahren soll zudem wenig umweltbelastend und ressourcenschonend durchführbar sein.

### Lösung

Die Aufgabe der vorliegenden Erfindung wird durch die Gegenstände der Patentansprüche gelöst.

Die Aufgabe wird insbesondere gelöst durch ein neues Verfahren zur Herstellung von Alkylindiumsesquichlorid (Verbindung (A)) mit der allgemeinen Formel:

**R₃In₂Cl**,

wobei R ein niederer Alkylrest ist, also ein solcher mit 1 bis 4 Kohlenstoffatomen. Der Alkylrest kann verzweigt oder unverzweigt sein, bevorzugt unverzweigt. Geeignete Alkylreste sind daher Isopropyl, Cyclopropyl, Isobutyl, sec-Butyl, tert-Butyl, insbesondere aber Propyl, n-Butyl sowie Ethyl oder Methyl.

Die Struktur der Verbindung (A) ist noch nicht abschließend geklärt und kann statt der oben angegebenen Formel R₃In₂Cl₃ auch als Gemisch von R₂InCl und RInCl₂ aufgefasst werden. Es ist auch möglich, dass diese Verbindungen miteinander und/oder mit R₃In₂Cl₃ im Gleichgewicht stehen. Das Verhältnis von R₂InCl und RInCl₂ zueinander muss nicht unbedingt bei 50:50 liegen, sondern kann auch im Verhältnis von im Allgemeinen etwa 40:60 bis etwa 60:40 schwanken.

Das Verfahren ist aufgrund der verwendeten Ausgangssubstanzen und weiterer verwendeter Reagenzien kostengünstig und wenig umweltbelastend und ermöglicht die Herstellung von R₃In₂Cl₃ mit schneller Prozessführung und hoher Ausbeute, sowie mit hoher Reinheit. Insbesondere kann erfindungsgemäß auf den Einsatz üblicherweise erforderlicher organischer Lösungsmittel verzichtet werden, was zu einer kosteneffektiven und umweltschonenden Verfahrensführung beiträgt. Weiterhin von Vorteil ist, dass Verbindung (A) einfach isolierbar sowie ausreichend lagerstabil ist. Andererseits ist Verbindung (A) aber auch ohne Isolierung weiteren Umsetzungsschritten zugänglich, so dass die Möglichkeit der Entwicklung kostengünstiger Mehrstufenreaktionen ohne aufwändige Zwischenisolierung besteht (so genannte Ein-Topf-Reaktion).

Das erfindungsgemäße Verfahren eignet sich besonders zur Herstellung von Methylindiumsesquichlorid (Me₃In₂Cl₃) und Ethylindiumsesquichlorid (Et₃In₂Cl₃), bzw. Mischungen aus Me₂InCl/MelnCl₂ und Et₂InCl/EtInCl₂ (zum Teil auch in nicht stöchiometrischen Verhältnissen), ganz besonders für die Herstellung von Me₃In₂Cl₃. R ist also vorzugsweise ausgewählt aus Ethyl und Methyl, ganz besonders bevorzugt ist R Methyl. Methyl und Ethyl werden im Folgenden mit Me für Methyl und Et für Ethyl abgekürzt.

Erfindungsgemäß wird also zunächst ein neues Verfahren zur Herstellung von R₃In₂Cl₃, also der Verbindung (A), als Präkursor-Vorstufe bereitgestellt. An das erfindungsgemäße Verfahren können sich weitere Reaktionsschritte anschlie-βen, so dass erfindungsgemäß auch Indium-haltige Präkursoren für MOCVD-Prozesse kostengünstig und mit schneller Prozessführung sowie in hoher Ausbeute und Reinheit erhältlich sind. Das erfindungsgemäße Verfahren umfasst also die Herstellung von Verbindung (A). In Ausführungsformen können sich an das erfindungsgemäße Verfahren zusätzliche Reaktionsschritte zur Herstellung von Indium-haltigen Präkursoren anschließen.

Die indiumhaltigen Präkursoren sind vorzugsweise ausgewählt aus Verbindungen der allgemeinen Formel R₃In (also Verbindung (B)) und R₂InR' (also Verbindung (C)). Bedingt durch die Verfahrensführung stimmt R erfindungsgemäß in Verbindung (A), (B) und (C) überein, R' kann hiervon abweichend sein wie weiter unten ausgeführt.

Dabei sind Indium-haltige Präkursoren der allgemeinen Formel:

**R₃ln,**

erfindungsgemäß solche, in denen R ein niederer Alkylrest mit 1 bis 4 Kohlenstoffatomen ist. Der Alkylrest kann verzweigt oder unverzweigt, bevorzugt unverzweigt sein. R ist insbesondere ausgewählt aus Ethyl und Methyl, insbesondere ist R Methyl.

Indium-haltige Präkursoren der allgemeinen Formel:

**R₂InR',**

sind erfindungsgemäß solche, in denen R ein niederer Alkylrest mit 1 bis 4 Kohlenstoffatomen ist, der verzweigt oder unverzweigt sein kann, und wobei R' ein nukleophiler Rest ist, der von R verschieden ist. R' ist vorzugsweise ausgewählt aus verzweigtem oder unverzweigtem und substituiertem oder unsubstituiertem Alkyl, verzweigtem oder unverzweigtem und substituiertem oder unsubstituiertem Aryl. R' kann insbesondere mit verzweigten oder unverzweigten Alkyl- oder Alkoxygruppen, oder mit Aminresten substituiertes Phenyl oder Alkyl sein. Insbesondere handelt es bei sich bei R' um Alkyl- oder Arylreste mit 1 bis 6 Kohlenstoffatomen, welche substituiert sind mit verzweigten oder unverzweigten Alkyl- oder Alkoxygruppen, wie Methyl, Ethyl, n-Butyl, Propyl, sec-Butyl, Tert.-Butyl, Isobutyl, Isopropyl, Cyclopropyl, Cyclobutyl, Methoxy, Ethoxy, n-Butoxy, Propoxy, sec-Butoxy, Tert.-Butoxy, Isobutoxy, Isopropoxy, Cyclopropoxy, Cyclobutoxy, oder aber Alkyl- oder Arylreste mit 1 bis 6 Kohlenstoffatomen, die (insbesondere einfach, oder zweifach) substituiert sind mit Aminresten, welche selbst mit Resten des Typs verzweigten oder unverzweigten Alkylgruppen, wie Methyl, Ethyl, n-Butyl, Propyl, sec-Butyl, Tert.-Butyl, Isobutyl, Isopropyl, Cyclopropyl, Cyclobutyl, substituiert sind.

Der nukleophile Rest R' kann beispielsweise Phenyl, Toluyl, Mesityl, Dimethylamino, Diethylamino, Dibutylamino, Diisopropylamino, Et₂N-(CH₂)₃, Me₂N-(CH₂)₂, Me₂N-CH₂, Et₂N-(CH₂)₂, Et₂N-CH₂, Isopropyl, Cyclopropyl, Isobutyl, sec-Butyl, tert-Butyl, Cyclopropyl, insbesondere aber Propyl, n-Butyl sowie Ethyl oder Methyl sein. Sofern die Definitionen von R und R' gleiche Reste umfassen, so müssen sich in Verbindung (C) R und R' voneinander unterscheiden. Ist also z.B. R gleich Methyl, dann muss R' von Methyl verschieden sein.

In einer Ausführungsform der Erfindung ist R Methyl und R' ist ein Me₂N-(CH₂)₃-Rest. In einer weiteren Ausführungsform der Erfindung ist R Methyl und R' Ethyl. In einer weiteren Ausführungsform der Erfindung ist R Ethyl und R' Methyl. Daher ergeben sich die Verbindungen Me₂InEt, Et₂InMe sowie Me₂In-(CH₂)₃-N-Me₂ bzw. (CH₃)₂In-(CH₂)₃-N-(CH₃)₂. In dieser Ausführungsform schließen sich also weitere Reaktionsschritte an das erfindungsgemäße Verfahren an, so dass auch Indium-haltige Präkursoren, vorzugsweise R₃In (also Verbindung (B)) oder R₂InR' (also Verbindung (C)), kostengünstig und bedarfsgerecht sowie mit schneller Prozessführung erhalten werden können.

Die aus Verbindung (A) bevorzugt erhältlichen Indium-haltigen Präkursoren (B) und (C) sind aufgrund der besonders hohen Reinheit besonders geeignet für die Herstellung von in der Halbleiterindustrie verwendeten und im Rahmen von MOCVD-Prozessen hergestellten Indium-haltigen Schichten Filmen, wie InP-, InAlP- und AlInGaP-Schichten.

### 1. Verfahren zur Herstellung von Verbindung (A)

Das erfindungsgemäße Verfahren zur Herstellung von R₃In₂Cl₃, also Verbindung (A), umfasst die Reaktionsschritte:
a1) Reaktion von Indium mit einem Alkyldonor zur Bildung von Verbindung (A) in Gegenwart eines Aktivators, wobei es sich bei dem Alkyldonor um ein Alkylchlorid (RCl) handelt, und
a2) optional Isolierung der Verbindung (A).

### Reaktionsschritt a1):

Das Indium kann in einer Reinheit von bevorzugt mindestens 5N oder höher (entsprechend >99,999% metallische Reinheit bezogen auf Indium) eingesetzt, jedoch auch als 4N (=99,99%ige metallische Reinheit) Indium eingesetzt werden. Im Prinzip ist jedoch aber auch eine Verwendung von Indium niedrigerer Reinheit möglich. Die Partikelgröße kann in weiten Grenzen variiert werden, da das Indium bei Reaktionstemperatur geschmolzen vorliegt (Schmelzpunkt von Indium ca. 156 °C). Zur einfacheren Abmessung der benötigten Mengen und Befüllung des Reaktors können beispielsweise Granalien mit einer Partikelgröße von 1 mm bis 10 mm, insbesondere von 4 mm bis 6 mm verwendet werden (z.B. so genannte Indium-Shots von ca. 0,5 cm Größe), aber auch Pulver oder gar Barren können eingesetzt werden.

Der Alkyldonor ist eine Verbindung, die eine Alkylgruppe umfasst, wobei es sich bei dem Alkyldonor um ein Alkylhalogenid handelt, wobei Alkyl wie oben definiert ist und als Halogenid Chlor, Brom oder lod verwendet werden können, insbesondere Chlor. Bei dem Alkyldonor kann es sich daher insbesondere um ein Alkylchlorid handeln, das also neben der Alkylgruppe auch wenigstens ein Chloratom umfasst. Insbesondere handelt es sich bei dem Alkyldonor um ein Alkylhalogenid, (insbesondere ein Alkylchlorid), wobei Alkyl wie oben (siehe Definition von R) definiert ist, besonders bevorzugt ist Alkyl Methyl oder Ethyl, insbesondere Methyl. In bevorzugten Ausführungsformen ist also der Alkyldonor Methylchlorid (Chlormethan) oder Ethylchlorid (Chlorethan), besonders bevorzugt Methylchlorid.

Bevorzugt werden für diese Reaktion 1,5 bis 5 Äquivalente Alkyldonor pro Äquivalent Indium eingesetzt, oder 1,5 bis 4,5 Äquivalente oder 1,5 bis 4 Äquivalente Alkyldonor pro Äquivalent Indium, insbesondere von 1,5 bis 3 oder 1,5 bis 2,5 oder 1,5 bis 2,9 Äquivalenten Alkyldonor pro Äquivalent Indium verwendet. Wird der Alkyldonor in einem zu geringen Anteil im Verhältnis zum Indium eingesetzt, so besteht die Gefahr einer nicht vollständigen Umsetzung und einer verringerten Ausbeute an Verbindung (A). Werden zu hohe Mengen an Alkyldonor im Verhältnis zum Indium eingesetzt, so wird das Verfahren insgesamt zu teuer und zu unwirtschaftlich und ist im industriellen Maßstab nicht mehr wirtschaftlich durchführbar, was unerwünscht ist.

Als besonders vorteilhaft hat es sich erwiesen, zwischen 1,5 und 4 Äquivalente Alkyldonor pro Äquivalent Indium einzusetzen, noch weiter bevorzugt zwischen 1,7 und 3 Äquivalente Alkyldonor pro Äquivalent Indium und ganz besonders bevorzugt zwischen 1,8 und 2,5 Äquivalente Alkyldonor pro Äquivalent Indium. Hierdurch lassen sich besonders hohe Ausbeuten an Verbindung (A) erzielen.

Bevorzugt werden das Indium und der Alkyldonor dem Reaktionsgefäß nacheinander zugesetzt. Besonders bevorzugt wird zunächst Indium und Aktivator vorgelegt und anschließend der Alkyldonor zugesetzt. Dies führte überraschend zu hohen Ausbeuten und vereinfacht zudem den apparativen Aufwand. So können Indium und Aktivator in den Reaktor einfach eingewogen werden. Anschließend kann eine kontrollierte Zugabe des Alkyldonors erfolgen.

Die Zugabe des Alkyldonors zum Indium erfolgt bevorzugt dadurch, dass der Alkyldonor, der bevorzugt bei Normbedingungen gasförmig vorliegt (Siedepunkt von MeCl liegt bei -24°C, von EtCl bei 12°C), durch kontrolliertes kontinuierliches Einleiten von gasförmigem Alkyldonor der Reaktion zugeführt wird

Beim Einleiten wird während des Reaktionsverlaufes vorzugsweise immer soviel Alkyldonor nachgeliefert, wie verbraucht wurde, so dass der Reaktions(über)druck konstant gehalten wird. Die Steuerung erfolgt zum Beispiel automatisch über ein mit einem Dosierventil gekoppelten Drucksensor.

Optional kann der Alkyldonor durch Einkondensieren zugegeben werden. Wird der Alkyldonor einkondensiert, so liegt die Temperatur während der Zugabe vorteilhaft unterhalb von 0°C. Besonders bevorzugt wird eine Temperatur von -20°C während der Zugabe des Alkyldonors nicht überschritten. Vorzugsweise wird bei Zugabe des Alkyldonors von außen gekühlt. Bevorzugt erfolgt die Zugabe des Alkyldonors durch Einkondensieren bei Temperaturen unterhalb von 0°C, weiter bevorzugt bei Temperaturen von -260°C bis -20°C, (Kühlung mit flüssigem Stickstoff oder Trockeneis) Diese Angaben gelten nur für die Zugabe des Alkyldonors über das optionale Einkondensieren. Das Einkondensieren des Alkyldonors erfolgt vorzugsweise im Vakuum bei einem Restgasdruck von vorzugsweise unter 1 hPa, bevorzugt unter 0,1 hPa und mehr bevorzugt bei maximal 5x10⁻² hPa. Durch das sich anschließende Erhitzen des Reaktionsgemisches wird ein Überdruck von bis zu 15 bar, insbesondere von 0,2 bis 1,5 MPa, bevorzugt 0,5 bis 1 MPa und noch mehr bevorzugt zwischen 0,6 und 1 MPa im Reaktionsgefäß eingestellt, wobei diese Bedingungen nur beim Einkondensieren des Alkyldonors sinnvoll sind.

Bevorzugt wird der Alkyldonor gasförmig in den Reaktor geleitet. Wenn die Zugabe des Alkyldonors durch Aufdrücken oder kontrolliertes Einleiten erfolgt, so wird im Regelfall nicht von Anfang an die gesamte benötigte Menge an Alkyldonor zugegeben, wie dies beim Einkondensieren der Fall ist, sondern permanent Alkyldonor zur Indium-Aktivator-Mischung dosiert, bis die Umsetzung vollständig ist.

Optional kann der Alkyldonor jedoch auch flüssig in den Reaktor eingeleitet werden. Dies kann großtechnisch von Vorteil sein, da dann keine externe Beheizung des Alkylchlorid-Vorratstanks oder eine Verdampfereinheit notwendig sind um einen stabilen Gasdruck des Alkyldonors aufrecht zu erhalten, da u. A. Chlormethan und Chlorethan als Flüssiggas verkauft werden. Die Dosierung des flüssigen Alkyldonors kann dann unter Druck direkt aus dem Flüssiggas-Tank erfolgen. Im Reaktor verdampft der Alkyldonor durch die herrschenden Reaktionsbedingungen sofort, so dass die Umsetzung im Reaktor mit gasförmigem Alkyldonor erfolgt.

Die Zugabe des Alkyldonors durch Einleiten oder Aufdrücken beginnt im Regelfall bei Temperaturen bei oder oberhalb von 20 °C. In einer Ausführungsform liegt das Indium, bzw die Indium-Aktivator-Mischung, im Reaktor bei Beginn der Zugabe des Alkyldonors flüssig vor. Da reines Indium einen Schmelzpunkt von 156,6 °C aufweist, findet die Zugabe dann bei einer Temperatur von 156°C oder mehr statt. Da sich durch die Anwesenheit des Aktivators der Schmelzpunkt der vorgelegten Indium-Mischung senken kann, kann die Mischung auch unterhalb 156 °C schon flüssig sein. Das bedeutet, dass in dieser Ausführungsform Indium und Aktivator im Reaktor vorgelegt und erhitzt werden, bis die Mischung flüssig ist und dann begonnen wird, Alkyldonor einzuleiten. Optional kann auch zunächst Indium im Reaktor vorgelegt werden, anschließend wird erhitzt, bis das Indium flüssig vorliegt, dann kann der Aktivator zugegeben und mit der Zugabe des Alkyldonors begonnen werden.

In einer anderen Ausführungsform wird der Alkyldonor, wie beispielsweise das Methylchlorid, bei Raumtemperatur in den Reaktor mit der vorgelegten Indium-Aktivator-Mischung geleitet und dann auf die gewünschte Reaktionstemperatur erhitzt und die Einleitung von Alkyldonor währenddessen fortgesetzt.

Nach Beginn der Zugabe des Alkyldonors wird das Reaktionsgemisch aufgeheizt. Eine Temperatur von 250°C, vorzugsweise von 235°C wird dabei bevorzugt nicht überschritten, um Nebenreaktionen zu vermindern, wie auch aus wirtschaftlichen Erwägungen. Bei Reaktionstemperaturen oberhalb von 235 °C kann eine langsame thermische Zersetzung beobachtet werden, bei der vermutlich Indium als Zersetzungsprodukt entsteht. Es wird bevorzugt auf Temperaturen von wenigstens 150°C, weiter bevorzugt wenigstens 170°C und besonders bevorzugt wenigstens 180°C erhitzt, um eine besonders vollständige Umsetzung zu Verbindung (A) zu ermöglichen. Die Reaktionstemperaturen liegen also im Bereich von etwa 150°C bis etwa 250°C, oder von 170°C bis 235°C, oder von 180°C bis 230°C, unabhängig davon, auf welche Art und Weise die Zugabe des Alkyldonors erfolgt ist.

Reaktionsschritt a1) kann unter Inertgas wie Argon oder Stickstoff durchgeführt werden. Es ist jedoch möglich, die Reaktion ohne zusätzliches Inertgas in einer reinen Atmosphäre aus Alkyldonor, wie beispielsweise Methylchlorid oder Ethylchlorid, durchzuführen, was Vorteile hat.

Im Allgemeinen erfolgt die Zugabe des Alkyldonors bei einem vorgegebenen konstanten Druck, beispielsweise bei einem Überdruck von 1 bar bis 4,5 bar, oder bei 1,5 bar bis 4 bar (absoluter Druck: 2 bar bis 5,5 bar oder 2,5 bar bis 5 bar) Hierbei kann so vorgegangen werden, dass ein gewünschter Überdruck an Alkyldonor (also z.B Ethylchlorid oder Methylchlorid), wie beispielsweise 3,5 bar, vorgegeben wird. Über einen Durchflussregler wird immer so viel an Alkyldonor (also z.B. Ethylchlorid oder Methylchlorid), in den Reaktor nachgeliefert wie verbraucht wird, so dass der Druck im Reaktor in etwa konstant, also beispielsweise bei 4,5 bar (bzw. der Überdruck bei 3,5 bar), bleibt. Wenn kein Alkyldonor (also z.B. Ethylchlorid oder Methylchlorid), mehr verbraucht wird, so ist die Reaktion beendet.

Bei der Reaktion wird ein Aktivator zugesetzt. Der Fachmann weiß, was unter einem Aktivator zu verstehen ist, nämlich Verbindungen, die üblicherweise in geringen Mengen zur Beschleunigung der Reaktion und Umsetzung beitragen.

Geeignete Aktivatoren sind allgemein Lewis-Säuren, wie zum Beispiel Indiumhalogenide InX₃ (wobei X Chlor, Brom oder lod sein kann), Indiumtrichlorid (InCl₃), Aluminiumtrichlorid (AlCl₃), Kupferchlorid (CuCl₂), Chlor Cl₂, Chlorwasserstoff HCl, Eisenchlorid FeCl₃, (PtCl₄)²⁻, PdCl₂, Oxide wie In₂O, TiO₂, NiO₂, Fe₂O₃, oder [PₙBu₄][InCl₄]. Es wird vermutet, dass sich in situ aus Indiummetall und den verwendeten Lewis-Säuren niedervalente Indium(I)verbindungen, wie InCI, bilden, die dann in einer oxidativen Addition mit dem Alkyldonor reagieren.

Gemäß dem vorliegenden Verfahren ist es jedoch vorteilhaft, wenn der Aktivator verschieden von Indiumhalogeniden InX₃, wobei X Chlor, Brom oder lod sein kann, von Chlor Cl₂, Chlorwasserstoff HCl, Wasserstoff H₂, Eisenchlorid FeCl₃, (PtCl₄)²⁻, PdCl₂, Indiumtrichlorid (InCl₃), Aluminiumtrichlorid (AlCl₃), Kupferchlorid (CuCl₂), und verschieden von Oxiden, insbesondere von In₂O, TiO₂, NiO₂, Fe₂O₃ ist.

Es wurde jedoch überraschend gefunden, dass Alkylindiumsesquichlorid (R₃In₂Cl₃), Dialkylindiumchlorid (R₂InCl), Alkylindiumdichlorid (RInCl₂), Trialkylindium (R₃In) in Mischung mit Indiumhalogenid InX₃ (wobei X Chlor, Brom oder lod sein kann), wie insbesondere Indiumtrichlorid (InCl₃), und deren Mischungen ebenso verwendet werden können und sogar besser geeignet sind. Dies hat den Vorteil, dass keine anderen Metalle als Indium im System vorhanden sind, die später zu störenden Verunreinigungen führen würden. Ein besonderer Vorteil bei der Verwendung des Produktes Alkylindiumsesquichlorid selbst als Aktivator liegt darin, dass dann in einer einfachen Reaktionsführung Reste des Reaktionsproduktes im Reaktor zur Aktivierung des nächsten Batches genutzt werden können und neben Indium und dem Alkyldonor keine zusätzlichen Chemikalien benötigt werden und die Herstellung von Verbindung (A) semikontinuierlich betrieben werden kann. Es ergibt sich für den Fachmann, dass auch andere Alkylindiumhalogenide verwendet werden können, umfassend Alkylindiumsesquihalogenid, Dialkylindiumhalogenid, Alkyllindiumdihalogenid und Mischungen davon, wobei das Halogenid ausgewählt ist aus F, Br und I. Besonders bevorzugt ist als Halogenid aber Chlorid. Der Aktivator ist daher bevorzugt ausgewählt aus Dialkylindiumchlorid (R₂InCl), Alkylindiumdichlorid (RInCl₂), Trialkylindium (R₃In) im Gemisch mit Indiumhalogenid InX₃ (wobei X Chlor, Brom oder lod sein kann), insbesondere Indiumtrichlorid (InCl₃) und Mischungen daraus, wobei R wie oben definiert ist. Auch Mischungen können eingesetzt werden.

In einer Ausgestaltung der Erfindung wird der Aktivator dem Indium vor dem Beginn der Zugabe des Alkyldonors zugesetzt. Der Aktivator wird vorzugsweise in einer solchen Menge eingesetzt, dass das Molverhältnis von Indium zu Aktivator bei wenigstens 4:1, weiter bevorzugt bei wenigstens 5:1, vorzugsweise bei wenigstens 6:1 und noch mehr bevorzugt über 8:1 liegt. Ist die Menge an Aktivator zu hoch, besteht die Gefahr der unvollständigen Umsetzung zu Verbindung A. Das Molverhältnis von Indium zu Aktivator beträgt vorzugsweise höchstens 300:1, bevorzugt höchstens 250:1 und noch mehr bevorzugt höchstens 200:1 Besonders vorteilhaft sind daher Molverhältnisse von Indium zu Aktivator im Bereich von >100:1, also von etwa 110:1, 130:1 oder 140:1 . Bei zu geringen Mengen an Aktivator kann die Gefahr einer nicht mehr ausreichenden Wirkung des Aktivators bestehen. Unter dem Molverhältnis wird das Verhältnis der molaren Menge an Indium zu der molaren Menge an Aktivator verstanden. Unterschiedliche Aktivatoren weisen unterschiedlichen optimale Molverhältnissen zum Indium auf, welche in wenigen Handversuchen auf einfache Weise ermittelt werden können; so können beispielsweise Indiumtrichlorid und Trimethylindium gemeinsam im Verhältnis von 10:1 zu Indium eingesetzt werden, bei Verwendung von Methylindiumsesquichlorid haben sich hingegen Verhältnisse im Bereich von etwa 20:1 bewährt.

Es können auch zwei Verbindungen eingesetzt werden, welche zunächst zu der eigentlich als Aktivator aktiven Verbindung miteinander reagieren, wie zum Beispiel Indiumtrichlorid und Trimethylindium, die gemeinsam zu Indiumsesquichlorid reagieren, welches dann als Aktivator wirkt. In diesem Fall bezieht sich das Molverhältnis natürlich auf die als Aktivator wirksame Verbindung Indiumsesquichlorid und nicht auf die Ausgangsstoffe Indiumtrichlorid und Trimethylindium hierfür.

Überraschenderweise konnten mit dem erfindungsgemäßen Verfahren auch unter Abwesenheit organischer Lösungsmittel hohe Ausbeuten an Verbindung (A) erzielt werden. Es kann bei der Reaktion des Indiums mit dem Alkyldonor zur Bildung von Verbindung (A) also auf organische Lösungsmittel verzichtet werden. Unter organischen Lösungsmitteln werden erfindungsgemäß kohlenstoffhaltige, flüssige Substanzen verstanden. Unter Abwesenheit eines organischen Lösungsmittels wird erfindungsgemäß verstanden, dass kein organisches Lösungsmittel zusätzlich als Reaktionsmedium eingesetzt wird. Dies hat den Vorteil, dass mögliche organische Verunreinigungen in der Verbindung (A) durch partielle Zersetzung des Lösungsmittels vermieden werden. Darüber hinaus kann das Verfahren hierdurch umweltschonender durchgeführt werden. Außerdem konnte bei Abwesenheit organischer Lösungsmittel im Schritt a1) überraschenderweise eine besonders hohe Selektivität der Reaktion verzeichnet werden.

Die Reaktionszeit des Schritts a1) beträgt vorzugsweise zwischen 10 min und 30 Stunden. Eine Reaktionszeit von mindestens 15 min, weiter bevorzugt von mindestens 30 min, und noch weiter bevorzugt von mindestens 40 min hat sich als besonders vorteilhaft in Bezug auf die Ausbeute an Verbindung (A) erwiesen. Die Reaktionszeit liegt besonders bevorzugt bei höchstens 28 Stunden, weiter bevorzugt bei höchstens 12 Stunden. Zu hohe Reaktionszeiten führen zu einem sehr kostenintensiven und unwirtschaftlichen Verfahren.

In allen Ausführungsformen des erfindungsgemäßen Verfahrens läuft im Reaktionsschritt a1) schematisch folgende Reaktion ab:

2 In + 3 RCl → **R₃In₂Cl₃**

### Reaktionsschritt a2):

Die erfindungsgemäß optionale Isolierung der Verbindung (A) umfasst vorzugsweise das Abtrennen flüchtiger Bestandteile vom im Reaktionsgefäß befindlichen Reaktionsgemisch und/oder Verfahrensschritte ausgewählt aus der Sublimation der Verbindung (A) vom Reaktionsgemisch und dem mechanischen Entfernen von Verbindung (A) aus dem Reaktionsgefäß. Als einfache Variante des mechanischen Entfernens kann das Ablassen des Produktes im flüssigen Zustand angesehen werden.

Der Begriff "Isolierung" beziehungsweise "Isolieren" umfasst dabei das Abtrennen des jeweiligen gewünschten Reaktionsproduktes vom im Reaktionsgefäß befindlichen Reaktionsgemisch durch Entfernen des Reaktionsproduktes aus dem Reaktionsgefäß oder das Entfernen sonstiger Verbindungen neben dem Reaktionsprodukt vom Reaktionsgemisch derart, dass nur das Reaktionsprodukt im Reaktionsgefäß zurückbleibt.

In einer Ausführungsform wird Verbindung (A) durch Entnahme aus dem Reaktionsgefäß isoliert, was mit einem Hilfsmittel wie Löffel, Spatel, Schaber etc. durchgeführt werden kann. Das Ablassen im flüssigen Zustand ist eine sehr einfache Möglichkeit, was etwa durch Ablassen durch ein entsprechendes Ventil oder durch Überdrücken der Flüssigkeit in einen Behälter bewirkt werden kann. Es hat sich als besonders vorteilhaft für die Reinheit der Verbindung (A) erwiesen, zunächst flüchtige Nebenbestandteile vom im Reaktionsgefäß befindlichen Gemisch, insbesondere noch vorhandenen Alkyldonor wie RCl, also z.B. Methylchlorid oder Ethylchlorid, abzutrennen und erst nachfolgend die Verbindung (A) aus dem Reaktionsgefäß zu entnehmen. Das Abtrennen flüchtiger Nebenbestandteile, insbesondere noch vorhandener Alkyldonor RCl, erfolgt vorzugsweise durch Anlegen von Vakuum. Dabei hat sich ein Vakuum mit einem Restgasdruck unter 1hPa, weiter bevorzugt unter 0,1 hPa bewährt.

Optional können sich an das Isolieren der Verbindung (A) weitere Reinigungsschritte der Verbindung (A) anschließen, wobei dem Fachmann geeignete Verfahren zu Aufreinigung chemischer Stoffe bekannt sind. Erfindungsgemäß bevorzugt wird durch die besondere Verfahrensführung und die erfindungsgemäßen Edukte aber auch ohne weitere Reinigungsschritte bereits eine ausreichend hohe Reinheit der Verbindung (A) erzielt. Erfindungsgemäß bevorzugt sind daher neben der bevorzugten Isolierung von Verbindung (A), also der Abtrennung flüchtiger Nebenbestandteile und der Entnahme von Verbindung (A) aus dem Reaktionsgefäß, keine weiteren Reinigungsschritte von Verbindung (A) mehr erforderlich.

In einer Ausführungsform erfolgt während der Isolierung von Verbindung A nur eine unvollständige Entnahme des Reaktionsproduktes aus dem Reaktionsgefäß. Die im Reaktionsgefäß zurückbleibenden Reste an Verbindung A werden nach Zugabe von weiterem Indium und erneuter Zugabe von Alkyldonor als Aktivator für die weitere Herstellung von Verbindung A im nächsten Batch genutzt.

In alternativen Ausführungsformen erfolgt keine Isolierung von Verbindung (A) aus dem Reaktionsgemisch. In solchen Ausführungsformen wird das Reaktionsgemisch umfassend Verbindung (A) direkt zur Herstellung von Indium-haltigen Präkursoren, insbesondere Verbindung (B) oder (C), verwendet. In diesen Ausführungsformen schließen sich also zusätzliche Reaktionsschritte zur Herstellung von vorzugsweise Verbindung (B) oder (C) unmittelbar an Reaktionsschritt a1) an, ohne eine Isolierung der Verbindung (A) vom Reaktionsgemisch, also ohne den Reaktionsschritt a2). Dies ermöglicht eine noch schnellere Prozessführung bei der Herstellung Indium-haltiger Präkursoren.

Das erfindungsgemäße Verfahren ermöglicht die Herstellung von Verbindung (A) mit einer Ausbeute von vorzugsweise wenigstens 70%, weiter bevorzugt wenigstens 75%, noch weiter bevorzugt wenigstens 79% und ganz besonders bevorzugt von wenigstens 85% sowie noch weiter bevorzugt über 90% und noch mehr bevorzugt über 95%. Erfindungsgemäße Angaben zur Ausbeute sind stets auf die theoretische Ausbeute bezogen.

Die Reinheit der erfindungsgemäß hergestellten Verbindung (A) beträgt vorzugsweise wenigstens 95%, bevorzugt wenigstens 98% und besonders bevorzugt mehr als 99%. Es sind also vorzugsweise nicht mehr als 5%, bevorzugt nicht mehr als 2% und weiter bevorzugt unter 1% Verunreinigungen, also unerwünschte Substanzen, in der hergestellten Verbindung (A) enthalten.

Eine bevorzugte Verbindung (A), die nach dem erfindungsgemäßen Verfahren erhältlich ist, ist ausgewählt aus Methylindiumsesquichlorid (Me₃In₂Cl₃), das wie oben beschrieben auch als Gemisch aus Me₂InCl und MeInCl₂ aufgefasst werden kann, und Ethylindiumsesquichlorid (Et₃In₂Cl₃), das wie oben beschrieben auch als Gemisch aus Et₂InCl und EtlnCl₂ aufgefasst werden kann. Ganz besonders eignet sich das erfindungsgemäße Verfahren zur Herstellung von Me₃In₂Cl₃.

### 2. Weiterverarbeitung der Verbindung (A) zu Indium-haltigen Präkursoren

Die nach dem oben beschriebenen Verfahren erhaltene Verbindung (A) kann optional weiterverarbeitet werden zu Indium-haltigen Präkursoren, erfindungsgemäß bevorzugt ausgewählt aus den Verbindungen (B) und (C). Erfindungsgemäß ist daher auch die Verwendung der nach dem erfindungsgemäßen Verfahren hergestellten Verbindung (A) zur Herstellung von Indium-haltigen Präkursoren, bevorzugt ausgewählt aus Verbindung (B) und (C), für MOCVD- oder MOVPE-Prozesse.

Besonders geeignet ist die erfindungsgemäß hergestellte Verbindung (A) zur Herstellung von Indium-haltigen Präkursoren der allgemeinen Formel:

**R₃In,**

also Verbindung (B), wobei R ein niederer Alkylrest mit 1 bis 4 Kohlenstoffatomen ist. Der Alkylrest kann verzweigt oder unverzweigt sein, bevorzugt unverzweigt. R ist vorzugsweise ausgewählt aus Ethyl und Methyl, insbesondere ist R Methyl. R ist verfahrensbedingt durch den Rest R in Verbindung (A) bestimmt, so dass R in Verbindung (A) dem Rest R in Verbindung (B) entspricht.

Alternativ kann die erfindungsgemäß hergestellte Verbindung (A) zur Herstellung Indium-haltiger Präkursoren der allgemeinen Formel:

**R₂InR',**

also Verbindung (C), verwendet werden, wobei R ein niederer Alkylrest mit 1 bis 4 Kohlenstoffatomen ist, der verzweigt oder unverzweigt sein kann, und wobei R' ein von R verschiedener nukleophiler Rest ist. R' ist vorzugsweise ausgewählt aus verzweigtem oder unverzweigtem und substituiertem oder unsubstituiertem Alkyl, verzweigtem oder unverzweigtem und substituiertem oder unsubstituiertem Aryl.

R' kann insbesondere mit verzweigten oder unverzweigten Alkyl- oder Alkoxygruppen, oder mit Aminresten substituiertes Phenyl oder Alkyl sein. Insbesondere handelt es bei sich bei R' um Alkyl- oder Arylreste mit 1 bis 6 Kohlenstoffatomen, welche substituiert sind mit verzweigten oder unverzweigten Alkyl- oder Alkoxygruppen, wie Methyl, Ethyl, n-Butyl, Propyl, sec-Butyl, Tert.-Butyl, Isobutyl, Isopropyl, Cyclopropyl, Cyclobutyl, Methoxy, Ethoxy, n-Butoxy, Propoxy, sec-Butoxy, Tert.-Butoxy, Isobutoxy, Isopropoxy, Cyclopropoxy, Cyclobutoxy, oder aber Alkyl- oder Arylreste mit 1 bis 6 Kohlenstoffatomen, die (insbesondere einfach, oder zweifach) substituiert sind mit Aminresten, welche selbst mit Resten des Typs verzweigten oder unverzweigten Alkylgruppen, wie Methyl, Ethyl, n-Butyl, Propyl, sec-Butyl, Tert.-Butyl, Isobutyl, Isopropyl, Cyclopropyl, Cyclobutyl, substituiert sind.

Der nukleophile Rest R' kann beispielsweise Phenyl, Toluyl, Mesityl, Dimethylamino, Diethylamino, Dibutylamino, Diisopropylamino, Et₂N-(CH₂)₃, Me₂N-(CH₂)₂, Me₂N-CH₂, Et₂N-(CH₂)₂, Et₂N-CH₂, Isopropyl, Cyclopropyl, Isobutyl, sec-Butyl, tert-Butyl, Cyclopropyl, insbesondere aber Propyl, n-Butyl sowie Ethyl oder Methyl sein. Sofern die Definitionen von R und R' gleiche Reste umfassen, so müssen sich in Verbindung (C) R und R' voneinander unterscheiden. Ist also R gleich Methyl, dann muss R' von Methyl verschieden sein.

In einer Ausführungsform der Erfindung ist R Methyl und R' ist ein Me₂N-(CH₂)₃-Rest. In einer weiteren Ausführungsform der Erfindung ist R Methyl und R' Ethyl. In einer weiteren Ausführungsform der Erfindung ist R Ethyl und R' Methyl. Daher ergeben sich die Verbindungen Me₂InEt, Et₂InMe sowie Me₂In-(CH₂)₃-N-Me₂ bzw. (CH₃)₂In-(CH₂)₃-N-(CH₃)₂.

R ist verfahrensbedingt durch den Rest R in Verbindung (A) bestimmt, so dass R in Verbindung (A) dem Rest R in Verbindung (C) entspricht.

### 2.1. Weiterverarbeitung der Verbindung (A) zu Verbindung (B)

In bevorzugten Ausführungsformen schließen sich an das Verfahren zur Herstellung der Verbindung (A) zusätzlich folgende weitere Reaktionsschritte an, wobei die Verbindung (B) erhältlich ist:
b1) Reaktion von Verbindung (A) mit einem Alkyllithium zur Bildung von Lithiumtetraalkylindat (LiInR₄), und Isolierung von LiInR₄ vom Reaktionsgemisch, und
b2) Reaktion des LiInR₄ mit einer Indiumchlorid-Komponente, wobei Verbindung (B) erhalten wird.

Reaktionsschritt b2) kann sich unmittelbar an Reaktionsschritt b1) anschließen. Alternativ kann Reaktionsschritt b2) auch zeitlich versetzt zu Reaktionsschritt b1) erfolgen.

### Reaktionsschritt b1):

Reaktionsschritt b1) umfasst die Reaktion von Verbindung (A) mit einem Alkyllithium zur Bildung von Lithiumtetraalkylindat, wobei das Lithiumtetraalkylindat folgender allgemeiner Formel genügt:

**LiInR₄**

wobei R wie oben definiert ist. R ist vorteilhaft Methyl oder Ethyl, insbesondere Methyl. R ist verfahrensbedingt durch den Rest R in Verbindung (A) bestimmt.

Der Begriff "Alkyllithium" umfasst solche Verbindungen, die wenigstens eine Alkylgruppe und Lithium umfassen. Das Alkyllithium weist erfindungsgemäß bevorzugt folgende allgemeine Formel auf:

**RLi**

wobei R wie oben definiert ist. Ganz besonders bevorzugt ist das Alkyllithium ausgewählt aus Ethyllithium (EtLi) und Methyllithium (MeLi), insbesondere ist das Alkyllithium Methyllithium.

Das Alkyllithium wird im Reaktionsschritt b1) als Alkylierungsmittel eingesetzt, nicht jedoch als Reduktionsmittel.

Reaktionsschritt b1) findet vorzugsweise in einem organischen Lösungsmittel statt. Als organische Lösungsmittel für Schritt b1) eignen sich insbesondere Dialkylether. Ganz besonders bevorzugt wird ein Lösungsmittel ausgewählt aus Diethylether, Diethoxymethan, Methyltetrahydrofuran, längerkettigen Ethern und Mischungen daraus im Reaktionsschritt b1) verwendet, wobei längerkettige Ether solche sind, die Alkylgruppen mit mehr als 2 C-Atomen umfassen. Noch mehr bevorzugt ist das Lösungsmittel Diethylether oder Di-n-butylether, weiter bevorzugt Diethylether.

Es hat sich als besonders vorteilhaft erwiesen, zwischen 4 und 5,3 Äquivalente Alkyllithium pro Äquivalent Verbindung (A) einzusetzen, besonders bevorzugt zwischen 4,8 und 5,3 Äquivalente und noch mehr bevorzugt zwischen 4,8 und 5,2 Äquivalente sowie ganz besonders bevorzugt etwa 5 Äquivalente.

In bevorzugten Ausführungsformen wird das Alkyllithium in dem organischen Lösungsmittel vorgelegt und Verbindung (A) anschließend zugesetzt, bevorzugt bei Temperaturen zwischen -10 und 10°C, weiter bevorzugt bei Temperaturen zwischen -5 und 5°C, weiter bevorzugt bei -2 bis 2°C und noch mehr bevorzugt bei 0 +/- 1°C. Die Reaktion findet vorzugsweise bei Temperaturen zwischen -30°C und dem Siedepunkt des organischen Lösungsmittels statt, weiter bevorzugt bei -5°C bis 35°C.

In alternativen Ausführungsformen wird Verbindung (A) in dem organischen Lösungsmittel vorgelegt und nachfolgend das Alkyllithium zugesetzt. Dabei wird das Alkyllithium als Mischung mit dem organischen Lösungsmittel bevorzugt zugetropft, besonders bevorzugt bei Temperaturen zwischen -10 und 10°C, weiter bevorzugt -5 und 5°C und noch weiter bevorzugt bei -2 bis 2°C.

Vorzugsweise wird nach Zugabe aller Reaktanden gerührt für bevorzugt wenigstens 10 min, weiter bevorzugt wenigstens 15 min. Die Reaktionszeit beträgt in der Regel nicht mehr als 48 Stunden, bevorzugt nicht mehr als 24 Stunden.

LiInR₄ wird isoliert vom Reaktionsgemisch. Dies erfolgt vorzugsweise durch Entfernen des Lösungsmittels und etwaiger Nebenprodukte, insbesondere LiCI, oder Rückstände der Reaktanden, vorzugsweise durch Abdestillieren flüchtiger Bestandteile und/oder Filtration des Reaktionsgemischs. Ein Isolieren des LiInR₄ durch Filtration zur Entfernung von LiCI und anschließende Entfernung des Lösungsmittels durch Destillation hat sich als besonders vorteilhaft erwiesen.

In einer bevorzugten Ausführungsform läuft im Reaktionsschritt b1) schematisch folgende Reaktion ab:

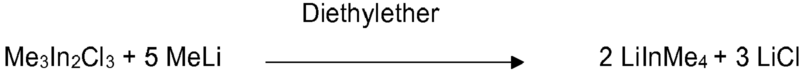

### Reaktionsschritt b2):

Aus LiInR₄ ist Verbindung (B) durch Reaktion von LiInR₄ mit einer Indiumchlorid-Komponente herstellbar.

Die "Indiumchlorid-Komponente" ist erfindungsgemäß eine Verbindung, die Indium und Chlorid umfasst. Der Begriff "Indiumchlorid-Komponente" umfasst insbesondere auch Verbindungen, die neben Indium und Chlorid auch wenigstens einen Alkylrest umfassen. Die Indiumchlorid-Komponente hat vorzugsweise folgende allgemeine Formel:

**RₐIn_{b}Cl_{c},**

wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8. R ist ein niederer Alkylrest mit 1 bis 4 Kohlenstoffatomen. Der Alkylrest kann verzweigt oder unverzweigt sein, bevorzugt unverzweigt. R ist vorzugsweise ausgewählt aus Ethyl und Methyl, insbesondere ist R Methyl.

Ganz besonders bevorzugt ist die Indiumchlorid-Komponente ausgewählt aus InCl₃, R₂InCl, R₃In₂Cl₃, RInCl₂ und Mischungen davon. Ganz besonders bevorzugte Indiumchlorid-Komponenten sind R₂InCl oder R₃In₂Cl₃, insbesondere Me₂InCl, Et₂InCl, Me₃In₂Cl3 oder Et₃In₂Cl₃, weiter bevorzugt Me₂lnCl oder Me₃In₂Cl₃. Bevorzugt wird Verbindung (A) als Indiumchlorid-Komponente eingesetzt, was das erfindungsgemäße Verfahren noch kostengünstiger gestaltet. In besonders bevorzugten Ausführungsformen ist die Indiumchlorid-Komponente daher R₃In₂Cl₃, also Verbindung (A). Die Indiumchlorid-Komponente wird vorteilhaft mit den oben beschriebenen Verfahrensschritten a1) und a2) erhalten.

Das Molverhältnis von Lithiumtetraalkylindat zu der Indiumchlorid-Komponente kann zwischen 1:1 bis 3:1 betragen, bevorzugt etwa 1:1, 2:1 oder 3:1. In Ausführungsformen, in denen die Indiumchlorid-Komponente R₂InCl ist, hat sich ein Molverhältnis von Lithiumtetraalkylindat zu der Indiumchlorid-Komponente von etwa 1:1 als besonders vorteilhaft erwiesen. In Ausführungsformen, in denen die Indiumchlorid-Komponente R₃In₂Cl₃ ist, ist ein Molverhältnis von Lithiumtetraalkylindat zu der Indiumchlorid-Komponente von etwa 3:1 besonders vorteilhaft. In Ausführungsformen, in denen die Indiumchlorid-Komponente RInCl₂ ist, ist ein Molverhältnis von Lithiumtetraalkylindat zu der Indiumchlorid-Komponente von etwa 2:1 besonders vorteilhaft.

Die Reaktion von Lithiumtetraalkylindat mit der Indiumchlorid-Komponente kann in einem organischen Lösungsmittel erfolgen. Geeignete organische Lösungsmittel für Schritt b2) sind ausgewählt aus Alkanen einschließlich von cyclischen gesättigten Kohlenwasserstoffen, Aromaten, Alkoholen, Ethern und cyclischen Ethern. Als organische Lösungsmittel für Schritt b2) haben sich insbesondere Alkane und Aromaten als geeignet erwiesen, bevorzugt ausgewählt aus *n-*Pentan, Cyclohexan, *n*-Decan, *n*-Heptan, *n*-Hexan, Methylcyclohexan, *n*-Nonan, *n*-Octan und Benzol, ganz besonders bevorzugt ist *n*-Pentan.

In alternativen Ausführungsformen wird kein organisches Lösungsmittel im Reaktionsschritt b2) verwendet, also kein organisches Lösungsmittel zusätzlich als Reaktionsmedium eingesetzt. Dies hat den Vorteil, dass mögliche, die Anwendbarkeit einschränkende organische Verunreinigungen in Verbindung (B) durch partielle Zersetzung des Lösungsmittels vermieden werden. Darüber hinaus kann das Verfahren hierdurch umweltschonender durchgeführt werden. In einer Ausführungsform wird Schritt b2) daher unter Abwesenheit organischer Lösungsmittel durchgeführt.

Vorzugsweise wird das LiInR₄ mit der Indiumchlorid-Komponente im Reaktor vorgelegt. Anschließend kann das organische Lösungsmittel zugesetzt werden. Vorzugsweise wird anschließend erhitzt, bevorzugt auf Temperaturen zwischen 30°C und 120°C, weiter bevorzugt auf Temperaturen zwischen 40°C und 100°C und noch mehr bevorzugt auf Temperaturen zwischen 50°C und 90°C. Vorzugsweise wird eine solche Temperatur für wenigstens 10 min und höchstens 24 Stunden, bevorzugt für wenigstens 30 min und höchstens 20 Stunden, weiter bevorzugt wenigstens 40 min und höchstens 12 Stunden und noch mehr bevorzugt für wenigstens 90 min und höchstens 3 Stunden aufrechterhalten.

Vorzugsweise wird anschließend abgekühlt, bevorzugt auf eine Temperatur von 25 +/- 5 °C.

Bevorzugt wird Verbindung (B) anschließend vom Gemisch isoliert. Das Isolieren von Verbindung (B) umfasst bevorzugt das Entfernen des organischen Lösungsmittels und von Verbindung (B) vom Reaktionsgemisch, das Salze wie beispielsweise Lithiumchlorid LiCI umfassen kann. Dies erfolgt insbesondere durch Umkondensieren von organischem Lösungsmittel und Verbindung (B) in ein neues Gefäß. Hierzu werden unter Vakuum alle flüchtigen Komponenten wie Verbindung (B) (also z.B. Trimethylindium) gemeinsam mit dem Lösungsmittel vom Rückstand (z.B. Salze wie LiCI) abdestilliert. Anschließend wird das Lösungsmittel von Verbindung (B) abgetrennt, bevorzugt durch Abdestillieren im Vakuum mit vorzugsweise einem Restgasdruck unter 0,1 hPa, weiter bevorzugt höchstens 0,01 hPa, vorzugsweise in eine Kühlfalle bei bevorzugt -10° +/- 5°C. Verbindung (B), beispielsweise Trimethylindium oder Triethylindium, bleibt dann im Gefäß zurück. Optional können sich weitere Reinigungsschritte anschließen nach dem Fachmann bekannten Reinigungsverfahren. Diese weiteren Reinigungsschritte können die Destillation, Sublimation oder Umkristallisation von Verbindung (B) umfassen.

In einer bevorzugten Ausführungsform läuft im Reaktionsschritt b2) schematisch folgende Reaktion ab:

LiInMe₄ + Me₂lnCl → 2 Me₃In + LiCl

In einer alternativen Ausführungsform, in der die Indiumchlorid-Komponente Verbindung (A) ist, läuft im Reaktionsschritt b2) schematisch folgende Reaktion ab:

3 LiInMe₄ + Me₃In₂Cl₃ → 5 Me₃In + 3 LiCI

Die zusätzlichen Reaktionsschritte umfassend b1) und b2) ermöglichen die Herstellung von Verbindung (B) aus Verbindung (A) mit einer Ausbeute von vorzugsweise wenigstens 60%, weiter bevorzugt wenigstens 70%, noch weiter bevorzugt wenigstens 75% und ganz besonders bevorzugt von 85% sowie noch weiter bevorzugt über 90%. Die Reinheit der erfindungsgemäß hergestellten Verbindung (B) beträgt vorzugsweise wenigstens 99%, bevorzugt wenigstens 99,5% und besonders bevorzugt mehr als 99,8% sowie weiter bevorzugt mehr als 99,999%. Insbesondere bei Durchführung eines weiteren Reinigungsschrittes der hergestellten Verbindung (B), vorzugsweise durch Sublimation von Verbindung (B), kann eine Reinheit von > 99,999% erreicht werden.

### 2.2. Weiterverarbeitung der Verbindung (A) zu Verbindung (C)

In alternativen Ausführungsformen wird Verbindung (A) weiterverarbeitet zu Verbindung (C), indem zusätzliche weitere Reaktionsschritte an das erfindungsgemäße Verfahren angeschlossen werden umfassend:
c1) Abtrennung von Dialkylindiumchlorid (R₂InCl) aus Verbindung (A), und
c2) Reaktion von R₂InCl mit einem Alkylierungsmittel zur Bildung von Verbindung (C).

Besonders bevorzugt handelt es sich bei Verbindung (C) um Dimethylaminopropyldimethylindium (DADI) oder Ethyldimethylindium (Me₂InEt).

Im Verfahrensschritt c1) erfolgt eine Abtrennung von Dialkylindiumchlorid aus R₃In₂Cl₃, das wie oben beschrieben auch als Gemisch aus R₂InCl und RInCl₂ betrachtet werden kann, wobei das Dialkylindiumchlorid durch die allgemeine Formel R₂InCl gekennzeichnet ist, wobei R wie oben definiert ist und vorteilhaft Methyl oder Ethyl, insbesondere Methyl sein kann, wobei R durch den Rest "R" in Verbindung (A) festgelegt ist. Die Abtrennung von R₂InCl aus Verbindung (A) kann durch Sublimation erfolgen. Bevorzugt wird Verbindung (A) dafür auf Temperaturen zwischen 150°C und 200°C, weiter bevorzugt zwischen 155°C und 195°C und insbesondere zwischen 160°C und 190°C, erhitzt. Optional kann die Sublimation auch im Vakuum erfolgen. Dabei hat sich ein Vakuum bevorzugt mit einem Restgasdruck unter 1 hPa, weiter bevorzugt unter 0,1 hPa bewährt. Dem Fachmann ist bekannt, dass bei Durchführung von Verfahrensschritt c) im Vakuum die Abtrennung von R₂InCl auch bei entsprechend niedrigeren Temperaturen durchgeführt werden kann. Es erfolgt vorzugsweise eine Auftrennung in einen Bodensatz und ein Sublimat, wobei es sich bei dem Sublimat vorzugsweise um R₂InCl handelt.

Durch Zusatz eines Alkalihalogenids wie zum Beispiel KCl, aber auch KF oder andere MX mit M=Na, K, Cs und X = F, Cl, Br, I) kann die Ausbeute bei der Sublimation deutlich gesteigert und R₂InCl vollständig abgetrennt werden.

In einer bevorzugten Ausführungsform läuft im Reaktionsschritt c1) schematisch folgende Reaktion ab:

2 R₃In₂Cl₃ + 2 KCl --> 2 K[R₃In₂Cl₄] --> K[InCl₄]+ KCl + 3 R₂InCl

Reaktionsschritt c1) erfolgt üblicherweise unter Schutzgas, zum Beispiel Argon oder Stickstoff.

Das Alkylierungsmittel im Schritt c2) ist insbesondere ausgewählt aus R'MgX, R'Li und R'₃Al, wobei R' wie oben definiert ist. Besonders bevorzugt ist das Alkylierungsmittel Me₂N-(CH₂)₃-M, wobei M insbesondere MgCl oder Li ist, oder auch Ethyllithium (EtLi).

Die Umsetzung von R₂InCl zu R₂InR', beispielsweise DADI, kann in einem organischen Lösungsmittel erfolgen durch Reaktion mit dem Alkylierungsmittel, beispielsweise Me₂N-(CH₂)₃-M im Falle von DADI. Das organische Lösungsmittel kann ein Dialkylether oder ein cyclischer Ether sein oder Mischungen daraus, insbesondere Diethylether oder THF, weiter bevorzugt THF.

Reaktionsschritt c2) erfolgt üblicherweise unter Schutzgas.

Bevorzugt wird das Alkylierungsmittel vorzugsweise in einem organischen Lösungsmittel, insbesondere THF, vorgelegt und anschließend R₂InCl zugegeben. Dabei wird R₂InCl besonders bevorzugt als Mischung mit dem organischen Lösungsmittel, insbesondere THF, zugetropft. Das Zutropfen von R₂InCl erfolgt vorzugsweise langsam, bevorzugt über wenigstens 10 min, weiter bevorzugt über wenigstens 20 min. Die Zugabe von R₂InCl erfolgt bevorzugt bei einer Temperatur unter 50°C, weiter bevorzugt unter 40°C und besonders bevorzugt bei Raumtemperatur, also 25°C +/- 5°C.

Nach Zugabe aller Reaktanden, insbesondere Alkylierungsmittel und R₂InCl, wird bevorzugt gerührt. Bevorzugt liegt die Temperatur beim Rühren unter 50°C, weiter bevorzugt unter 40°C und besonders bevorzugt bei Raumtemperatur, also 25°C +/- 5°C. Es wird vorzugsweise für wenigstens 5 Stunden, weiter bevorzugt für wenigstens 10 Stunden gerührt. Aus Kostengründen werden Reaktionszeiten von 80 Stunden, weiter bevorzugt 50 Stunden bevorzugt nicht überschritten.

Anschließend wird Verbindung (C) vorzugsweise vom Reaktionsgemisch isoliert. Das Isolieren von Verbindung (C) kann das Entfernen des organischen Lösungsmittels, bevorzugt im Vakuum, und die Abtrennung von Verbindung (B) vom Reaktionsgemisch durch Filtration und/oder Destillation umfassen.

Die Alkylierungsmittel können mit bekannten Verfahren hergestellt werden, beispielsweise Me₂N-(CH₂)₃-M aus 3-Chlor-1-(dimethylamino)propan durch Umsetzung mit Magnesiumspänen oder Lithiumspänen. Üblicherweise erfolgt die Herstellung von Me₂N-(CH₂)₃-M in einem organischen Lösungsmittel, insbesondere THF, unter Wärmezufuhr. Gegebenenfalls kann dabei lod zur Aktivierung zugesetzt werden. Andere bekannte Alkylierungmittel sind kommerziell erhältlich.

Durch die Einhaltung der Bedingungen des oben dargestellten Herstellverfahrens zur Herstellung von Verbindung (A) sowie optional der Weiterverarbeitung zu Indium-haltigen Präkursoren, bevorzugt ausgewählt aus Verbindung (B) und (C), können diese Verbindungen in hoher Ausbeute und mit hoher Reinheit hergestellt werden. Erfindungsgemäß ist zudem die nach dem Verfahren hergestellte Verbindung (A), insbesondere Me₃In₂Cl₃, und die daraus erhältlichen Indium-haltigen Präkursoren, insbesondere Trimethylindium und Dimethylaminopropyldimethylindium, sowie R₂InCl

Insbesondere die hohe Ausbeute und Reinheit sowie kosteneffiziente und wenig umweltbelastende Prozesswahl des erfindungsgemäßen Verfahrens prädestiniert das Verfahren zur industriellen Herstellung von Verbindung (A) beziehungsweise Indium-haltigen Präkursoren. Insbesondere entstehen erfindungsgemäß keine pyrophoren Zwischenprodukte, was im Lichte einer kosteneffektiven und gering aufwändigen Herstellung besonders vorteilhaft ist. Das erfindungsgemäße Verfahren ist insbesondere durch eine besonders hohe Indium-Ausnutzung gekennzeichnet. Der Indium-Gesamtumsatz des erfindungsgemäßen Verfahrens bezogen auf das eingesetzte Indium beträgt vorzugsweise ≥ 70%, weiter bevorzugt ≥ 75%, besonders bevorzugt ≥ 80% und noch mehr bevorzugt > 95%. Der Gehalt an Sauerstoff in der optional erhältlichen Verbindung (B) oder (C) einschließlich von Indiumalkoxiden und -oxiden liegt vorzugsweise bei < 100 ppm (m/m), insbesondere sogar bei < 1 ppm (m/m).

Eine spezifische Ausgestaltung betrifft ein Verfahren zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer IndiumchloridVerbindung zum Trialkylindium der Formel R₃In;
- Optional die Reinigung des erhaltenen Trialkylindiums.

Eine weitere spezifische Ausgestaltung betrifft ein Verfahren zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer IndiumchloridVerbindung zum Trialkylindium der Formel R₃In;
- Optional die Reinigung des erhaltenen Trialkylindiums.
wobei als Aktivator, als Indiumchloridverbindung oder für deren Kombination eine Verbindung (A) der Formel R₃In₂Cl₃ eingesetzt wird.

Eine weitere spezifische Ausgestaltung betrifft ein Verfahren zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer IndiumchloridVerbindung zum Trialkylindium der Formel R₃In; wobei
   der Aktivator verschieden ist von Indiumhalogeniden InX₃, wobei X Chlor, Brom oder lod sein kann, verschieden ist von Chlor Cl₂, Chlorwasserstoff HCl, Wasserstoff H₂, Eisenchlorid FeCl₃, (PtCl₄)²⁻, PdCl₂, der Aktivator verschieden ist von Oxiden, insbesondere von In₂O, TiO₂, NiO₂, Fe₂O₃
- Optional die Reinigung des erhaltenen Trialkylindiums.

Eine weitere spezifische Ausgestaltung betrifft ein Verfahren zur Herstellung einer Indiumchlorid-Komponente der allgemeinen Formel:

**RₐIn_{b}Cl_{c},**

wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8, wobei R ein Alkylrest mit 1 bis 4 Kohlenstoffatomen ist, der Alkylrest kann verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A); wobei
der Aktivator verschieden ist von Indiumhalogeniden InX₃, wobei X Chlor, Brom oder lod sein kann, verschieden ist von Chlor Cl₂, Chlorwasserstoff HCl, Wasserstoff H₂,Eisenchlorid FeCl₃, (PtCl₄)²⁻, PdCl₂, der Aktivator verschieden ist von Oxiden, insbesondere von In₂O, TiO₂, NiO₂, Fe₂O₃; und wobei
die Indiumchlorid-Komponente insbesondere sein kann: R₂InCl, R₃In₂Cl₃, RInCl₂ und Mischungen davon, oder insbesondere Me₂InCl, Et₂InCl, MeInCl₂, EtInCl₂, Me₃In₂Cl3 oder Et₃In₂Cl₃ (mit Et=Ethyl und Me=Methyl).

Eine weitere spezifische Ausgestaltung betrifft ein Verfahren zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, beinhaltend ein Verfahren zur Herstellung einer Indiumchlorid-Komponente der allgemeinen Formel:

**RₐIn_{b}Cl_{c},**

wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8, wobei R ein Alkylrest mit 1 bis 4 Kohlenstoffatomen ist, der Alkylrest kann verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A); wobei
der Aktivator verschieden ist von Indiumhalogeniden InX₃, wobei X Chlor, Brom oder lod sein kann, verschieden ist von Chlor Cl₂, Chlorwasserstoff HCl, Wasserstoff H₂, Eisenchlorid FeCl₃, (PtCl₄)²⁻, PdCl₂, der Aktivator verschieden ist von Oxiden, insbesondere von In₂O, TiO₂, NiO₂, Fe₂O₃; und wobei
die Indiumchlorid-Komponente insbesondere sein kann: R₂InCl, R₃In₂Cl₃, RInCl₂ und Mischungen davon, oder insbesondere Me₂InCl, Et₂InCl, MeInCl₂, EtInCl₂, Me₃In₂Cl₃ oder Et₃In₂Cl₃ (mit Et=Ethyl und Me=Methyl).

Eine weitere spezifische Ausgestaltung betrifft ein Verfahren zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer IndiumchloridVerbindung zum Trialkylindium der Formel R₃In; wobei
- bei der Herstellung der Verbindung (A) 1,5 bis 3 Äquivalente, insbesondere 1,5 bis 2,5 Äquivalente Alkylchlorid pro Äquivalent Indium eingesetzt werden.

Eine weitere spezifische Ausgestaltung betrifft ein Verfahren zur Herstellung einer Indiumchlorid-Komponente der allgemeinen Formel:

**RₐIn_{b}Cl_{c},**

wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A); wobei
bei der Herstellung der Indiumchlorid-Komponente 1,5 bis 3 Äquivalente, insbesondere 1,5 bis 2,5 Äquivalente Alkylchlorid pro Äquivalent Indium eingesetzt werden.

Eine weitere spezifische Ausgestaltung betrifft ein Verfahren zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer IndiumchloridVerbindung zum Trialkylindium der Formel R₃In; wobei
bei der Herstellung der Verbindung (A) die Zugabe des Alkylchlorids bei einem konstanten Überdruck von 1 bar bis 4,5 bar, oder 1,5 bar bis 4 bar oder bei 2 bar bis 3,5 bar erfolgt. Das Alkylchlorid wird vorteilhaft durch kontrolliertes Einleiten oder Aufdrücken von gasförmigem Alkylchlorid zugegeben.

Eine weitere spezifische Ausgestaltung betrifft ein Verfahren zur Herstellung einer Indiumchlorid-Komponente der allgemeinen Formel:

**RₐIn_{b}Cl_{c},**

wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A); wobei
bei der Herstellung der Indiumchlorid-Komponente die Zugabe des Alkylchlorids bei einem konstanten Überdruck von 1 bar bis 4,5 bar, oder 1,5 bar bis 4 bar oder bei 2 bar bis 3,5 bar erfolgt. Das Alkylchlorid wird vorteilhaft durch kontrolliertes Einleiten oder Aufdrücken von gasförmigem Alkylchlorid zugegeben.

Eine weitere spezifische Ausgestaltung betrifft ein Verfahren zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer IndiumchloridVerbindung zum Trialkylindium der Formel R₃In; wobei
bei der Umsetzung der Verbindung (A) mit einem Alkyllithium 1 bis 5 Äquivalente Alkyllithium pro Äquivalent der Verbindung (A) eingesetzt werden.

Die mit dem erfindungsgemäßen Verfahren optional herstellbaren Indiumhaltigen Präkursoren, insbesondere Trimethylindium und Dimethylaminopropyldimethylindium, eignen sich aufgrund der hervorragenden Reinheit, insbesondere des sehr niedrigen Sauerstoffgehaltes, besonders für MOCVD- Prozesse, beispielsweise zur Herstellung von Halbleitern oder Halbleiter-Bauelementen. Die schlussendlich hergestellten Halbleiter oder Halbleiter-Bauelemente sind vielseitig industriell einsetzbar.

Erfindungsgemäß sind daher auch ein Verfahren zur metallorganischen chemischen Gasphasenabscheidung (MOCVD) oder metallorganischen Gasphasenepitaxie (MOVPE) mit den Schritten
- Bereitstellen der Verbindung (B) nach einem Verfahren gemäß der Erfindung;
- Unterwerfen der Verbindung (B) einem Verfahren für die metallorganische chemische Gasphasenabscheidung (MOCVD) oder metallorganische Gasphasenepitaxie (MOVPE); sowie ein

Verfahren zur metallorganischen chemischen Gasphasenabscheidung (MOCVD) oder metallorganischen Gasphasenepitaxie (MOVPE) mit den Schritten
- Bereitstellen der Verbindung (C) nach einem Verfahren gemäß der Erfindung;
- Unterwerfen der Verbindung (C) einem Verfahren für die metallorganische chemische Gasphasenabscheidung (MOCVD) oder metallorganische Gasphasenepitaxie (MOVPE).

### Ausführungsbeispiele

Es wurde Me₃In₂Cl₃ (als Verbindung A) nach dem erfindungsgemäßen Verfahren hergestellt. Aus Verbindung (A) wurden ferner Me₃In als Verbindung (B) hergestellt. Ferner wurde Dimethylaminopropyldimethylindium als Verbindung (C) hergestellt.

### 1. Herstellung von Me₃In₂Cl₃

### 1.1. Reaktion von Indium mit Methylchlorid zur Bildung von Me₃In₂Cl₃ mit Aktivator (Molverhältnis Indium zu Aktivator: etwa 10:1)

2805 mg Indium (24,4 mmol) wurden in einer 250 mL Parr-Bombe vorgelegt und mit einem Gemisch aus 275 mg InCl₃ (1,24 mmol) und 200 mg Me₃In (1,25 mmol) sowie einem Magnetrührfisch versetzt. Die Parr-Bombe wurde anschließend zur Homogenisierung eine halbe Stunde in ein auf 220°C geheiztes Ölbad getaucht. Nach Abkühlen auf Raumtemperatur wurde die Parr-Bombe auf -200°C gekühlt und evakuiert. Anschließend wurde bei -200°C 2582 mg Methylchlorid (51,1 mmol, 2,1 eq. bezogen auf Indium) einkondensiert und die Parr-Bombe erneut auf 220°C erhitzt. Nach einer Stunde war das gesamte Indium aufgelöst. Während der Reaktion sublimierte ein farbloser Feststoff an die kälteren Regionen der Parr-Bombe, der durch wiederholtes Klopfen an der Parr-Bombe in die Reaktionszone befördert wurde. Nach Abkühlen auf Raumtemperatur wurde das überschüssige Methylchlorid durch Anlegen von Vakuum entfernt und 4810 mg Me₃In₂Cl₃ eines farblosen Feststoffes isoliert (entspricht 12,6 mmol Me₃In₂Cl₃, nach Abzug des eingesetzten Trimethylindium und InCl₃ bleiben 4335 mg/11,4 mmol/Ausbeute: 93% übrig).

### 1.2. Reaktion von Indium mit Methylchlorid zur Bildung von Me₃In₂Cl₃ mit Aktivator (Molverhältnis Indium zu Aktivator: etwa 177:1)

6,11 g Indium (53,2 mmol) und 60 mg InCl₃ (0,3 mmol) wurden in einer Parr-Bombe zusammen mit einem Rührfisch vorgelegt. Die Parr-Bombe wurde solange mit einem Heißluftföhn erhitzt, bis eine deutliche Rotbraunfärbung zu erkennen war. Anschließend wurde die Parr-Bombe im Vakuum auf Raumtemperatur abgekühlt und bei -196°C 5,99 g MeCl (118,6 mmol) einkondensiert. Die Parr-Bombe wurde nach dem Auftauen auf Raumtemperatur in ein auf 210°C geheiztes Ölbad getaucht. Dabei wurde darauf geachtet, dass die Temperatur im Bereich zwischen 205°C und 215°C lag. Nach 110 Minuten hatte sich das gesamte Indium aufgelöst und eine klare farblose Schmelze war zu beobachten. Die Parr-Bombe wurde aus dem Ölbad entnommen und alle flüchtigen Bestandteile im Vakuum entfernt. Es konnte Me₃In₂Cl₃ als ein farbloser Feststoff isoliert werden. Ausbeute: 9,82 g (25,8 mmol, 97%).

### 1.3. Reaktion von Indium mit Methylchlorid zur Bildung von Me₃In₂Cl₃ mit Aktivator (Molverhältnis Indium zu Aktivator: etwa 4,7:1)

In einer 125 mL Parrbombe werden 860 mg In (7.5 mmol), 298 mg Me₃In₂Cl₃ (0.8 mmol, aus Beispiel 1.1) mitsamt einem Magnetrührfisch vorgelegt. Nach Abkühlen auf -200°C und Evakuieren werden 1.22 g MeCl (24.2 mmol, 3.2 eq. bezogen auf Indium) einkondensiert und die Parrbombe in ein auf 220°C vorgeheiztes Ölbad getaucht. Nach einer Stunde hat sich das Indium komplett aufgelöst. Während der Reaktion ist die Abscheidung eines farblosen Feststoffes an den kälteren Gefäßwänden zu beobachten. Es wurden 1.505 g Me₃In₂Cl3 als farbloser Feststoff isoliert (entspricht 3.95 mmol, nach Abzug des eingesetzten Me₃In₂Cl₃ bleiben: 1207 mg/3,2 mmol/84 %).

### 1.4 Reaktion von Indium mit Methylchlorid von Me₃In₂Cl₃ mit Aktivator (Molverhältnis Indium zu Aktivator: etwa 10:1)

In einem 1L-Druckreaktor werden 300 g (2,62 mol) Indium vorlegt und unter Argon bei 160 °C aufgeschmolzen. Unter Rühren werden 49,92 g (0,13 mol) Me₃In₂Cl₃ zugegeben. Der Druckreaktor wird zunächst evakuiert um Argon zu entfernen, anschließend werden 3 bar (absolut, 2 bar Überdruck) MeCl aufgedrückt. Unter Rühren wird das Reaktionsgemisch auf 200 °C aufgeheizt. Bei einer Innentemperatur von ca. 185 °C ist der Beginn der Umsetzung durch den Start der Gasaufnahme erkennbar. Der Druck wird im Folgenden durch Nachfördern von MeCl konstant auf 3 bar gehalten. Bereits kurz nach Beginn der Reaktion kann die Entstehung einer flüssigen Phase auf dem geschmolzenen Indium beobachtet werden. Die rote Färbung dieser Lösung weist auf das Vorliegen von Indium(I)-Verbindungen hin. Der Reaktor wird für 10 Stunden bei einer Reaktionstemperatur von 200 °C gehalten, bis das Reaktionsgemisch kein MeCl mehr aufnimmt und kein flüssiges Indium mehr im Reaktor zu erkennen ist. Die blassgelbe Reaktionslösung wird anschließend auf Raumtemperatur abgekühlt, dabei erstarrt das Produkt im Reaktor und im Vakuum wird restliches MeCl aus dem Reaktor entfernt. Anschließend wird das Produkt unter Argon erneut durch Aufheizen verflüssigt und aus dem Druckreaktor in einen 1L-Schlenkkolben abgelassen. Es können 539 g Me₃In₂Cl₃ als farbloser Feststoff isoliert werden, dies entspricht einer Ausbeute von 98% (498 g, 1,28 mol,) bezogen auf das eingesetzte (metallische) Indium.

### 2. Weiterverarbeitung von Me₃In₂Cl₃ zu Me₃In

### 2.1. Reaktion von Me₃In₂Cl₃ mit MeLi zur Bildung von LiInMe₄

1430 mg Me₃In₂Cl₃ (3,75 mmol, aus Beispiel 1.1) wurden bei 0°C zu 12 mL einer MeLi-Lösung (1,565 mol/L in Diethylether) gegeben. Nach ca. 1 h Rühren bei Raumtemperatur wurde die Suspension ohne Celite filtriert und das Filtrat vom Lösungsmittel befreit. Es wurden 1128 mg eines farblosen Feststoffes isoliert (entspricht 6,2 mmol LiInMe₄, Ausbeute: 83%).

### 2.2. Reaktion von LiInMe₄ mit Me₃In₂Cl₃ zur Bildung von Me₃In

947 mg LiInMe₄ (5,2 mmol, aus Beispiel 2.1) und 660 mg Me₃In₂Cl₃ (1,73 mmol, aus Beispiel 1.3) wurden in einer 125 mL Parr-Bombe vorgelegt und mit 10 mL Pentan versetzt. Anschließend wurde die Parr-Bombe in ein auf 70°C vorgeheiztes Ölbad getaucht und zwei Stunden bei dieser Temperatur gerührt. Bei 70°C war eine klare Flüssigkeit mit grauem Festkörper (LiCI und Verunreinigungen) auszumachen, die beim Abkühlen auf Raumtemperatur zu einem Kristallbrei erstarrte. Die flüchtigen Bestandteile der Parr-Bombe wurden in eine Kühlfalle umkondensiert (RT→-78°C) und anschließend das Lösungsmittel Pentan bei -8°C (Kochsalz-Eis-Mischung) im Feinvakuum entfernt. Es konnten 980 mg eines farblosen Feststoffes isoliert werden, der nur mit Spuren von Lithiumchlorid verunreinigt war. Entspricht 6,1 mmol/Ausbeute: 70% Trimethylindium.

### 2.3. Reaktion von LiInMe₄ mit Me₂InCl zur Bildung von Me₃In

1079 mg LiInMe₄ (5,9 mmol) und 1067 mg Me₂lnCl (5,9 mmol) wurden in einer 125 mL Parr-Bombe vorgelegt und mit 20 mL Pentan versetzt. Anschließend wurde die Parr-Bombe in ein auf 70°C vorgeheiztes Ölbad getaucht und über Nacht bei dieser Temperatur gerührt. Bei 70°C war eine leicht trübe Suspension auszumachen, die beim Abkühlen auf Raumtemperatur zu einem Kristallbrei erstarrte. Die flüchtigen Bestandteile der Parr-Bombe wurden in eine Kühlfalle umkondensiert (RT → -78 °C) und anschließend das Lösungsmittel Pentan bei -8°C (Kochsalz-Eis-Mischung) im Feinvakuum entfernt. Es konnten 1591 mg eines farblosen Feststoffes isoliert werden (10.0 mmol, Ausbeute: 81% Trimethylindium).

### 3. Weiterverarbeitung von Me3In₂Cl₃ zu Dimethylaminopropyldimethylindium (DADI)

### 3.1. Abtrennung von Me₂InCl aus Me₃In₂Cl₃ durch Sublimation

1050 mg (2.76 mmol) Me₃In₂Cl₃ (aus Beispiel 1.4) wurden in einem Schlenkkolben über Nacht in ein auf 170-180°C heißes Ölbad getaucht. Ein farbloser Feststoff resublimierte an den kälteren Regionen des Schlenkkolbens. Nach Abkühlen auf Raumtemperatur war am Boden eine erkaltete Schmelze auszumachen. Masse des sublimierten Feststoffes (Me₂InCl, identifiziert über ¹H-NMR): 160 mg (0.89 mmol, Ausbeute: 32%). Masse der erkalteten Schmelze: 860 mg.

### 3.2 Abtrennung von Me₂InCl aus Me₃In₂Cl₃ durch Sublimation in Gegenwart von KCl

1.60 g (4.20 mmol) Me₃In₂Cl₃ (aus Beispiel 1.4) wurden zusammen mit 0.44 g (5.91 mmol) KCl in einem mit einem Sublimationsrohr ausgestatteten Schlenckolben bei 140 °C zusammengeschmolzen bis eine klare homogene Schmelze erhalten wurde. Nach Abkühlen auf Raumtemperatur wurde das ganze System auf 10⁻³ mbar evakuiert und die erstarrte Schmelze langsam auf 190 °C erhitzt. Dabei begann der Feststoff zu schmelzen und gleichzeitig war die Resublimation eines farblosen Feststoffes im Sublimationsrohr zu beobachten. Nach ca. zwei Stunden hatte sich die Schmelze in einen farblosen Feststoff umgewandelt und die Sublimation wurde beendet. Aus dem Sublimationsrohr konnten 1.12 g (6.22 mmol, Ausbeute: 99%) Me₂lnCl als farbloser Feststoff, identifiziert über ¹H-NMR, erhalten werden.

### 3.3. Reaktion von Me₂InCl mit Dimethylaminopropylmagnesiumchlorid

In einem 500 mL-Dreihalskolben wurden 150 mL getrocknetes THF und 5.26g (216 mmol, 1.95 Äquiv.) Magnesium-Späne vorgelegt und auf Rückfluss erhitzt. Nach Zugabe einer Spatelspitze lod zur Aktivierung des Magnesiums wurden 15.55 g (126 mmol, 1.14 Äquiv.) 3-Dimethylaminopropylchlorid langsam zugetropft und anschließend das Reaktionsgemisch für 2.5 h weiter unter Rückfluss erhitzt. Nach Abkühlen des Reaktionsgemisches auf Raumtemperatur wurden 20.00 g (111 mmol) Me₂lnCl gelöst in 150 mL getrocknetem THF innerhalb von 30 Minuten zugetropft und die entstehende Reaktionslösung 20 Stunden bei Raumtemperatur gerührt.

Anschließend wurde das THF im Vakuum entfernt, der Rückstand in 100 mL getrocknetem Hexan suspendiert, 2 h bei Raumtemperatur gerührt, der entstandene weiße Feststoff über eine Umkehrfritte abgetrennt und zweimal mit je 50 mL getrocknetem Hexan gewaschen. Das klare Filtrat wurde im Vakuum zur Trockne eingeengt und zur Reinigung bei 80°C und 5 mbar destilliert. Es wurde DADI als klare Flüssigkeit erhalten (19.7 g, 85.3 mmol, Ausbeute: 77%).

### 3.3. Reaktion von Me₂InCl mit 3-Dimethylaminopropyllithium

In einem 500 mL-Dreihalskolben wurden 75 mL getrocknetes THF und 1.16 g (170 mmol, 3 Äquiv.) Lithium-Späne vorgelegt und auf Rückfluss erhitzt. Nach Erreichen des Rückflusses wurden 10.12 g (83.2 mmol, 1.5 Äquiv.) 3-Dimethylaminopropylchlorid langsam zugetropft und anschließend das Reaktionsgemisch für 2.5 h weiter unter Rückfluss erhitzt. Nach Abkühlen des Reaktionsgemisches auf Raumtemperatur wurden 10.00 g (55.4 mmol) Me₂InCl gelöst in 75 mL getrocknetem THF innerhalb von 30 Minuten zugetropft und die entstehende Reaktionslösung 20 Stunden bei Raumtemperatur gerührt.

Anschließend wurde das THF im Vakuum entfernt, der Rückstand in 100 mL getrocknetem Pentan suspendiert, 2 h bei Raumtemperatur gerührt, der entstandene weiße Feststoff über eine Umkehrfritte abgetrennt und zweimal mit je 50 mL getrocknetem Pentan gewaschen. Das klare Filtrat wurde im Vakuum zur Trockne eingeengt und zur Reinigung bei 80°C destilliert. Es wurde DADI als klare Flüssigkeit erhalten.

## Patentansprüche

1. Verfahren zur Herstellung einer Verbindung (A) der allgemeinen Formel:
**R₃In₂Cl₃**
umfassend die Reaktionsschritte
a1) Reaktion von Indium mit einem Alkyldonor in Gegenwart eines Aktivators zur Bildung der Verbindung (A), wobei der Alkyldonor Alkylchlorid (RCI) ist,
a2) und optional Isolierung von Verbindung (A) vom Reaktionsgemisch;
wobei R ein Alkylrest mit 1 bis 4 Kohlenstoffatomen ist, und wobei R verzweigt oder unverzweigt ist.

2. Verfahren nach einem der vorangegangenen Ansprüche, wobei R Methyl oder Ethyl, insbesondere Methyl ist.

3. Verfahren nach einem der vorangegangenen Ansprüche, wobei der Aktivator verschieden ist von Chlor Cl₂, Chlorwasserstoff HCl, Wasserstoff H₂, Eisenchlorid FeCl₃, (PtCl₄)²⁻, PdCl₂, Indiumtrichlorid (InCl₃), Aluminiumtrichlorid (AlCl₃), Kupferchlorid (CuCl₂), Indiumhalogeniden InX₃, (mit X gleich Chlor, Brom oder lod),und der Aktivator verschieden von Oxiden, insbesondere von In₂O, TiO₂, NiO₂, Fe₂O₃ und Kombinationen daraus ist.

4. Verfahren nach einem der vorangegangenen Ansprüche, wobei der Aktivator ausgewählt ist aus Dialkylindiumchlorid (R₂InCl), Alkylindiumdichlorid (RInCl₂), ein Gemisch aus Trialkylindium (R₃In) und InCl₃, Alkylindiumsesquichlorid (R₃In₂Cl₃) und Mischungen daraus und wobei R ein Alkylrest mit 1 bis 4 Kohlenstoffatomen ist, und wobei R verzweigt oder unverzweigt ist.

5. Verfahren nach einem oder mehreren der Ansprüche 1 bis 4, wobei als Alkyldonor gasförmiges Alkylchlorid eingesetzt wird.

6. Verfahren nach einem der vorangegangenen Ansprüche, wobei 1,5 bis 5 Äquivalente, insbesondere 1,5 bis 2,9 Äquivalente Alkyldonor pro Äquivalent Indiumdonor eingesetzt werden.

7. Verfahren nach einem der vorangegangenen Ansprüche, wobei das Indium im Reaktionsschritt a1) im Reaktionsgefäß vorgelegt und der Alkyldonor anschließend zugegeben wird.

8. Verfahren nach Anspruch 7, wobei die Zugabe des Alkyldonors bei Temperaturen von oberhalb 20°C und bei einem Überdruck von 1 bar bis 4,5 bar durchgeführt wird.

9. Verfahren nach Anspruch 7, wobei die Zugabe des Alkyldonors bei Temperaturen zwischen -220°C und 0°C erfolgt, und wobei die Zugabe durch Einkondensieren des Alkyldonors erfolgt.

10. Verfahren nach einem der vorangegangenen Ansprüche, wobei das Verfahren die Isolierung von Verbindung (A) als Schritt a2) umfasst, und wobei die Isolierung das Abtrennen flüchtiger Nebenbestandteile vom im Reaktionsgefäß befindlichen Reaktionsgemisch und die nachfolgende Entnahme von Verbindung (A) aus dem Reaktionsgefäß umfasst.

11. Verfahren nach einem der vorangegangenen Ansprüche, wobei der Reaktionsschritt a1) unter Abwesenheit organischer Lösungsmittel durchgeführt wird.

12. Verfahren nach einem der vorangegangenen Ansprüche, wobei die Ausbeute an Verbindung (A) wenigstens 79% beträgt.

13. Verfahren nach einem der vorangegangenen Ansprüche, wobei die Reinheit der Verbindung (A) wenigstens 95% beträgt.

14. Verfahren zur Herstellung einer Verbindung (B) der allgemeinen Formel
**R₃In,**
umfassend die Reaktionsschritte
b0) optionales Bereitstellen der Verbindung (A) nach einem der Ansprüche 1 bis 13;
b1) Reaktion von Verbindung (A) mit einem Alkyllithium zur Bildung von Lithiumtetraalkylindat (LiInR₄), und Isolierung von LiInR₄ vom Reaktionsgemisch, und
b2) Reaktion von LiInR₄ mit einer Indiumchlorid-Komponente, um die Verbindung (B) zu erhalten
wobei R ein verzweigter oder unverzweigter Alkylrest mit 1 bis 4 Kohlenstoffatomen ist.

15. Verfahren nach Anspruch 14, wobei die Indiumchlorid-Komponente die allgemeine Formel aufweist:
**RₐIn_{b}Cl_{c}**
wobei a eine Zahl ausgewählt aus 0, 1, 2 und 3 und b eine Zahl ausgewählt aus 1 und 2 und c eine Zahl ausgewählt aus 1, 2 und 3 ist, und wobei a + b + c = 4 oder ein Vielfaches von 4 ist, und wobei R ein Alkylrest mit 1 bis 4 Kohlenstoffatomen ist, und wobei R verzweigt oder unverzweigt ist.

16. Verfahren nach einem der Ansprüche 14 oder 15, wobei die Indiumchlorid-Komponente ausgewählt ist aus R₂InCl, R₃In₂Cl₃, RlnCl₂, InCl₃ und Mischungen daraus.

17. Verfahren nach einem der Ansprüche 14 oder 15, wobei die Indiumchlorid-Komponente ausgewählt ist aus R₂InCl, R₃In₂Cl₃, RInCl₂ und Mischungen daraus.

18. Verfahren nach einem der Ansprüche 14 bis 17, wobei die Ausbeute an Verbindung (B) über 90% beträgt.

19. Verfahren nach einem der Ansprüche 14 bis 18, wobei die Reinheit der Verbindung (B) wenigstens 99% beträgt.

20. Verfahren zur Herstellung einer Verbindung (C) mit der allgemeinen Formel:
**R₂InR'**
umfassend folgende zusätzliche Reaktionsschritte:
c1) Abtrennen von Dialkylindiumchlorid aus Verbindung (A), wobei das Dialkylindiumchlorid der allgemeinen Formel genügt:
**R₂InCl,**
wobei R wie oben definiert ist; und
c2) Reaktion von R₂InCl mit einem Alkylierungsmittel zur Bildung von Verbindung (C)
wobei R' ein nukleophiler Rest ist ausgewählt aus der Gruppe bestehend ausverzweigtem oder unverzweigtem und substituiertem oder unsubstituiertem Alkyl, verzweigtem oder unverzweigtem und substituiertem oder unsubstituiertem Aryl, welche insbesondere mit verzweigten oder unverzweigten Alkyl- oder Alkoxygruppen, oder mit Aminresten substituiert sein können.

21. Verfahren nach Anspruch 20, wobei das Alkylierungsmittel ausgewählt ist aus R'MgX, R'Li und R'₃Al.

22. Verfahren nach einem der Ansprüche 20 oder 21, wobei R Methyl ist, und wobei R' ein Me₂N-(CH₂)₃-Rest oder ein Ethylrest ist.

23. Verfahren nach einem oder mehreren der Ansprüche 14 bis 19 zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer IndiumchloridVerbindung zum Trialkylindium der Formel R₃In;
- Optional die Reinigung des erhaltenen Trialkylindiums.
wobei als Aktivator, als Indiumchloridverbindung oder für deren Kombination eine Verbindung (A) der Formel R₃In₂Cl₃ eingesetzt wird.

24. Verfahren nach einem oder mehreren der Ansprüche 14 bis 19 zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer IndiumchloridVerbindung zum Trialkylindium der Formel R₃In; wobei
der Aktivator verschieden ist von Indiumhalogeniden InX₃, wobei X Chlor, Brom oder lod sein kann, verschieden ist von Chlor Cl₂, Chlorwasserstoff HCl, Eisenchlorid FeCl₃, (PtCl₄)²⁻, PdCl₂, der Aktivator verschieden ist von Oxiden, insbesondere von In₂O, TiO₂, NiO₂, Fe₂O₃
- Optional die Reinigung des erhaltenen Trialkylindiums.

25. Verfahren nach einem oder mehreren der vorstehenden Ansprüche, insbesondere Ansprüche 1 bis 13, zur Herstellung einer Indiumchlorid-Komponente der allgemeinen Formel:
**RₐIn_{b}Cl_{c},**
wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A); wobei
der Aktivator verschieden ist von Indiumhalogeniden InX₃, wobei X Chlor, Brom oder lod sein kann, verschieden ist von Chlor Cl₂, Chlorwasserstoff HCl, Eisenchlorid FeCl₃, (PtCl₄)²⁻, PdCl₂, der Aktivator verschieden ist von Oxiden, insbesondere von In₂O, TiO₂, NiO₂, Fe₂O₃; und wobei
die Indiumchlorid-Komponente insbesondere sein kann: R₂InCl, R₃In₂Cl₃, RInCl₂ und Mischungen davon, oder insbesondere Me₂InCl, Et₂InCl, MeInCl₂, EtInCl₂, Me₃In₂Cl₃ oder Et₃In₂Cl₃ (mit Et=Ethyl und Me=Methyl).

26. Verfahren nach einem oder mehreren der Ansprüche 14 bis 19, zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, beinhaltend ein Verfahren zur Herstellung einer Indiumchlorid-Komponente der allgemeinen Formel:
**RₐIn_{b}Cl_{c},**
wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8, wobei R ein Alkylrest mit 1 bis 4 Kohlenstoffatomen ist, der Alkylrest kann verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A); wobei
der Aktivator verschieden ist von Indiumhalogeniden InX₃, wobei X Chlor, Brom oder lod sein kann, verschieden ist von Chlor Cl₂, Chlorwasserstoff HCl, Eisenchlorid FeCl₃, (PtCl₄)²⁻, PdCl₂, der Aktivator verschieden ist von Oxiden, insbesondere von In₂O, TiO₂, NiO₂, Fe₂O₃; und wobei
die Indiumchlorid-Komponente insbesondere sein kann: R₂InCl, R₃In₂Cl₃, RInCl₂ und Mischungen davon, oder insbesondere Me₂InCl, Et₂InCl, MeInCl₂, EtInCl₂, Me₃In₂Cl₃ oder Et₃In₂Cl₃ (mit Et=Ethyl und Me=Methyl).

27. Verfahren nach einem oder mehreren der Ansprüche 14 bis 19 zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer Indiumchlorid-Verbindung zum Trialkylindium der Formel R₃In; wobei
- bei der Herstellung der Verbindung (A) 1,5 bis 3 Äquivalente, insbesondere 1,5 bis 2,5 Äquivalente Alkylchlorid pro Äquivalent Indium eingesetzt werden.

28. Verfahren nach einem oder mehreren der vorstehenden Ansprüche, insbeondere der Ansprüche 1 bis 13, zur Herstellung einer Indiumchlorid-Komponente der allgemeinen Formel:
**RₐIn_{b}Cl_{c}**,
wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A); wobei
bei der Herstellung der Indiumchlorid-Komponente 1,5 bis 3 Äquivalente, insbesondere 1,5 bis 2,5 Äquivalente Alkylchlorid pro Äquivalent Indium eingesetzt werden.

29. Verfahren nach einem oder mehreren der Ansprüche 14 bis 19 zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer Indiumchlorid-Verbindung zum Trialkylindium der Formel R₃In; wobei
bei der Herstellung der Verbindung (A) die Zugabe des Alkylchlorids bei einem konstanten Überdruck von 1 bar bis 4,5 bar, oder 1,5 bar bis 4 bar oder bei 2 bar bis 3,5 bar erfolgt und das Alkylchlorid vorteilhaft durch kontrolliertes Einleiten von gasförmigem Alkylchlorid zugegeben wird.

30. Verfahren nach einem oder mehreren der vorstgehenden Ansprüche, insbesondere der Ansprüche 1 bis 13, zur Herstellung einer Indiumchlorid-Komponente der allgemeinen Formel:
**RₐIn_{b}Cl_{c}**,
wobei a eine Zahl ausgewählt aus 0, 1, 2 und 3 ist und b eine Zahl ausgewählt aus 1 und 2 ist und c eine Zahl ausgewählt aus 1, 2 und 3 ist, und wobei a + b + c = 4 oder ein Vielfaches von 4 sind, besonders bevorzugt ist die Summe aus a, b und c = 4 oder 8, wobei R ein Alkylrest mit 1 bis 4 Kohlenstoffatomen ist, der Alkylrest kann verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A); wobei
bei der Herstellung der Indiumchlorid-Komponente die Zugabe des Alkylchlorids bei einem konstanten Druck von 1 bar bis 4,5 bar, oder 1,5 bar bis 4 bar oder bei 2 bar bis 3,5 bar erfolgt und das Alkylchlorid vorteilhaft durch kontrolliertes Einleiten von gasförmigem Alkylchlorid zugegeben wird.

31. Verfahren nach einem oder mehreren der Ansprüche 14 bis 19 zur Herstellung von Trialkylindium der Formel R₃In, wobei R ein Alkylrest mit 1 bis 4 Kohlenstoffatomen ist, der Alkylrest verzweigt oder unverzweigt und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer Indiumchlorid-Verbindung zum Trialkylindium der Formel R₃In; wobei
bei der Umsetzung der Verbindung (A) mit einem Alkyllithium 1 bis 5 Äquivalente Alkyllithium pro Äquivalent der Verbindung (A) eingesetzt werden.

32. Verfahren nach einem oder mehreren der Ansprüche 14 bis 19 zur Herstellung von Trialkylindium der Formel R₃In, wobei R ein verzweigter oder unverzweigter Alkylrest mit 1 bis 4 Kohlenstoffatomen ist, und insbesondere Ethyl oder Methyl sein kann, mit den Schritten
- Herstellen einer Verbindung (A) der Formel R₃In₂Cl₃ durch Reaktion von Indium-Metall mit einem Alkylchlorid der Formel RCl in Gegenwart eines Aktivators;
- Optional die Isolierung der Verbindung (A);
- Umsetzung der Verbindung (A) mit einem Alkyllithium zur Bildung von Lithiumtetraalkylindat LiInR₄ und dessen Isolierung und optionaler weiterer Reinigung;
- Reaktion des Lithiumtetraalkylindat LiInR₄ mit einer Indiumchlorid-Verbindung zum Trialkylindium der Formel R₃In;
- Optional die Reinigung des erhaltenen Trialkylindiums.

33. Verfahren zur metallorganischen chemischen Gasphasenabscheidung (MOCVD) oder metallorganischen Gasphasenepitaxie (MOVPE) mit den Schritten
- Bereitstellen der Verbindung (B) nach einem Verfahren gemäß einem der Ansprüche 14 bis 19;
- Unterwerfen der Verbindung (B) einem Verfahren für die metallorganische chemische Gasphasenabscheidung (MOCVD) oder metallorganische Gasphasenepitaxie (MOVPE).

34. Verfahren zur metallorganischen chemischen Gasphasenabscheidung (MOCVD) oder metallorganischen Gasphasenepitaxie (MOVPE) mit den Schritten
- Bereitstellen der Verbindung (C) nach einem Verfahren gemäß einem der Ansprüche 20 bis 22;
- Unterwerfen der Verbindung (C) einem Verfahren für die metallorganische chemische Gasphasenabscheidung (MOCVD) oder metallorganische Gasphasenepitaxie (MOVPE).

35. Verbindung (A), hergestellt nach einem Verfahren gemäß einem der Ansprüche 1 bis 13.

## Claims

1. Method for producing a compound (A) having the general formula:
**R₃In₂Cl₃**
comprising the reaction steps of
a1) reacting indium with an alkyl donor in the presence of an activator to form compound (A), wherein the alkyl donor is alkyl chloride (RCI),
a2) and optionally isolating compound (A) from the reaction mixture;
wherein R is an alkyl radical having 1 to 4 carbon atoms, and wherein R is branched or unbranched.

2. Method according to one of the preceding claims, wherein R is methyl or ethyl, in particular methyl.

3. Method according to one of the preceding claims, wherein the activator is different from chlorine Cl₂, hydrogen chloride HCI, hydrogen H₂, iron chloride FeCl₃, (PtCl₄)²⁻, PdCl₂, indium trichloride (InCl₃), aluminum trichloride (AlCl₃), copper chloride (CuCl₂), indium halogenides InX₃, (with X equal to chlorine, bromine, or iodine), and the activator is different from oxides, in particular from In₂O, TiO₂, NiO₂, Fe₂O₃, and combinations thereof.

4. Method according to one of the preceding claims, wherein the activator is selected from dialkyl indium chloride (R₂InCl) alkylindium dichloride (RInCl₂), a mixture of trialkylindium (R₃In) and InCl₃, alkylindium sesquichloride (R₃In₂Cl₃), and mixtures thereof and wherein R is an alkyl radical having 1 to 4 carbon atoms, and wherein R is branched or unbranched.

5. Method according to one or more of claims 1 to 4, wherein gaseous alkyl chloride is used as the alkyl donor.

6. Method according to one of the preceding claims, wherein 1.5 to 5 equivalents, in particular 1.5 to 2.9 equivalents, of alkyl donor are used per equivalent of indium donor.

7. Method according to one of the preceding claims, wherein the indium in reaction step a1) is provided in a reaction vessel, and the alkyl donor is subsequently added.

8. Method according to claim 7, wherein the alkyl donor is added at temperatures above 20 °C and at an overpressure of 1 bar to 4.5 bars.

9. Method according to claim 7, wherein the addition of the alkyl donor is carried out at temperatures between -220 °C and 0 °C, and wherein the addition is performed by condensing the alkyl donor.

10. Method according to one of the preceding claims, wherein the method comprises the isolation of compound (A) as step a2), and wherein the isolation comprises the separation of volatile secondary components from the reaction mixture located in the reaction vessel and the subsequent removal of compound (A) from the reaction vessel.

11. Method according to one of the preceding claims, wherein the reaction step a1) is carried out in the absence of organic solvents.

12. Method according to one of the preceding claims, wherein the yield of compound (A) is at least 79 %.

13. Method according to one of the preceding claims, wherein the purity of compound (A) is at least 95 %.

14. Method for producing a compound (B) having the general formula
**R₃In**,
comprising the reaction steps of
b0) optionally providing compound (A) according to one of claims 1 to 13;
b1) reacting compound (A) with an alkyl lithium to form lithium tetraalkylindate (LiInR₄), and isolating LiInR₄ from the reaction mixture, and
b2 reacting LiInR₄ with an indium chloride component to obtain compound (B),
wherein R is a branched or unbranched alkyl radical having 1 to 4 carbon atoms.

15. Method according to claim 14, wherein the indium chloride component has the general formula:
**RaIn_{b}Cl_{c}**
wherein a is a number selected from 0, 1, 2, and 3, and b is a number selected from 1 and 2, and c is a number selected from 1, 2, and 3, and wherein a + b + c = 4 or a multiple of 4, and wherein R is an alkyl radical having 1 to 4 carbon atoms, and wherein R is branched or unbranched.

16. Method according to one of claims 14 or 15, wherein the indium chloride component is selected from R₂InCl, R₃ln₂Cl₃, RInCl₂, InCl₃, and mixtures thereof.

17. Method according to one of claims 14 or 15, wherein the indium chloride component is selected from R₂InCl, R₃In₂Cl₃, RInCl₂, and mixtures thereof.

18. Method according to one of claims 14 to 17, wherein the yield of compound (B) is above 90 %.

19. Method according to one of claims 14 to 18, wherein the purity of compound (B) is at least 99 %.

20. Method for producing a compound (C) having the general formula:
**R₂IₙR'**
comprising the following additional reaction steps:
c1) separating dialkyl indium chloride from compound (A), wherein the dialkyl indium chloride satisfies the general formula:
**R₂InCl**,
wherein R is defined as above; and
c2) reacting R₂InCl with an alkylating agent to form compound (C).
wherein R' is a nucleophilic residue selected from the group consisting of branched or unbranched and substituted or unsubstituted alkyl, branched or unbranched and substituted or unsubstituted aryl, which can, in particular, be substituted with branched or unbranched alkyl or alkoxy groups, or with amine residues.

21. Method according to claim 20, wherein the alkylating agent is selected from R'MgX, R'Li, and R'₃Al.

22. Method according to one of claims 20 or 21, wherein R is methyl, and wherein R' is a Me₂N-(CH₂)₃ radical or an ethyl radical.

23. Method according to one or more of claims 14 to 19 for producing trialkylindium having the formula R₃In, wherein R is an alkyl radical having 1 to 4 carbon atoms, and the alkyl radical can be branched or unbranched and can, in particular, be ethyl or methyl, with the steps of
- producing a compound (A) having the formula R₃In₂Cl₃ by reacting indium metal with an alkyl chloride having the formula RCI in the presence of an activator;
- optionally isolating compound (A);
- reacting compound (A) with an alkyl lithium to form lithium tetraalkylindate LiInR₄ and isolating and optionally further purifying the latter;
- reacting lithium tetraalkylindate LiInR₄ with an indium chloride compound to trialkylindium having the formula R₃In;
- optionally purifying the obtained trialkylindium,
wherein a compound (A) having the formula R₃In₂Cl₃ is used as activator, as indium chloride compound, or for the combination thereof.

24. Method according to one or more of claims 14 to 19 for producing trialkylindium having the formula R₃In, wherein R is an alkyl radical having 1 to 4 carbon atoms, and the alkyl radical can be branched or unbranched and can, in particular, be ethyl or methyl, with the steps of
- producing a compound (A) having the formula R₃In₂Cl₃ by reacting indium metal with an alkyl chloride having the formula RCI in the presence of an activator;
- optionally isolating compound (A);
- reacting compound (A) with an alkyl lithium to form lithium tetraalkylindate LiInR₄ and isolating and optionally further purifying the latter;
- reacting lithium tetraalkylindate LiInR₄ with an indium chloride compound to trialkylindium having the formula R₃In; wherein
the activator is different from indium halogenides InX₃, where X may be chlorine, bromine, or iodine, is different from chlorine Cl₂, hydrogen chloride HCI, iron chloride FeCl₃, (PtCl₄)²⁻, PdCl₂, the activator is different from oxides, in particular from In₂O, TiO₂, NiO₂, Fe₂O₃;
- optionally purifying the obtained trialkylindium.

25. Method according to one or more of the preceding claims, in particular claims 1 to 13, for producing an indium chloride component having the general formula:
**RₐIn_{b}Cl_{c}**,
wherein a is a number selected from 0, 1, 2, and 3, and b is a number selected from 1 and 2, and c is a number selected from 1, 2, and 3, and wherein a + b + c = 4 or a multiple of 4 - particularly preferably, the sum of a, b, and c = 4 or 8 - wherein R is an alkyl radical having 1 to 4 carbon atoms, and the alkyl radical can be branched or unbranched and can, in particular, be ethyl or methyl, with the steps of
- producing a compound (A) having the formula R₃In₂Cl₃ by reacting indium metal with an alkyl chloride having the formula RCI in the presence of an activator;
- optionally isolating compound (A); wherein
the activator is different from indium halogenides InX₃, where X may be chlorine, bromine, or iodine, is different from chlorine Cl₂, hydrogen chloride HCI, iron chloride FeCl₃, (PtCl₄)²⁻, PdCl₂, the activator is different from oxides, in particular from In₂O, TiO₂, NiO₂, Fe₂O₃; and wherein
the indium chloride component can, in particular, comprise: R₂InCl, R₃In₂Cl₃, RInCl₂, and mixtures thereof, or, in particular, Me₂InCl, Et₂InCl, MeInCl₂, EtInCl₂, Me₃In₂Cl₃, or Et₃In₂Cl₃ (where Et=ethyl and Me=methyl).

26. Method according to one or more of claims 14 or 19 for producing trialkylindium having the formula R₃In, wherein R is an alkyl radical having 1 to 4 carbon atoms, and the alkyl radical can be branched or unbranched and can, in particular, be ethyl or methyl, including a method for producing an indium chloride component having the general formula:
**RₐIn_{b}Cl_{c}**,
wherein a is a number selected from 0, 1, 2, and 3, and b is a number selected from 1 and 2, and c is a number selected from 1, 2, and 3, and wherein a + b + c = 4 or a multiple of 4, the sum of a, b, and c particularly preferably being 4 or 8, wherein R is an alkyl radical having 1 to 4 carbon atoms, and the alkyl radical can be branched or unbranched and can, in particular, be ethyl or methyl, with the steps of
- producing a compound (A) having the formula R₃In₂Cl₃ by reacting indium metal with an alkyl chloride having the formula RCI in the presence of an activator;
- optionally isolating compound (A); wherein
the activator is different from indium halogenides InX₃, where X may be chlorine, bromine, or iodine, is different from chlorine Cl₂, hydrogen chloride HCI, iron chloride FeCl₃, (PtCl₄)²⁻, PdCl₂, the activator is different from oxides, in particular from In₂O, TiO₂, NiO₂, Fe₂O₃; and wherein
the indium chloride component can, in particular, comprise: R₂InCl, R₃In₂Cl₃, RInCl₂, and mixtures thereof, or, in particular, Me₂InCl, Et₂InCl, MeInCl₂, EtInCl₂, Me₃In₂Cl₃, or Et₃In₂Cl₃ (where Et=ethyl and Me=methyl).

27. Method according to one or more of claims 14 to 19 for producing trialkylindium having the formula R₃In, wherein R is an alkyl radical having 1 to 4 carbon atoms, and the alkyl radical can be branched or unbranched and can, in particular, be ethyl or methyl, with the steps of
- producing a compound (A) having the formula R₃In₂Cl₃ by reacting indium metal with an alkyl chloride having the formula RCI in the presence of an activator;
- optionally isolating compound (A);
- reacting compound (A) with an alkyl lithium to form lithium tetraalkylindate LiInR₄ and isolating and optionally further purifying the latter;
- reacting lithium tetraalkylindate LiInR₄ with an indium chloride compound to trialkylindium having the formula R₃In; wherein
- in the production of compound (A), 1.5 to 3 equivalents, in particular 1.5 to 2.5 equivalents, of alkyl chloride per equivalent of indium are used.

28. Method according to one or more of the preceding claims, in particular claims 1 to 13, for producing an indium chloride component having the general formula:
**RₐIn_{b}Cl_{c},**
wherein a is a number selected from 0, 1, 2, and 3, and b is a number selected from 1 and 2, and c is a number selected from 1, 2, and 3, and wherein a + b + c = 4 or a multiple of 4, the sum of a, b, and c particularly preferably being 4 or 8, wherein R is an alkyl radical having 1 to 4 carbon atoms, and the alkyl radical can be branched or unbranched and can, in particular, be ethyl or methyl, with the steps of
- producing a compound (A) having the formula R₃In₂Cl₃ by reacting indium metal with an alkyl chloride having the formula RCI in the presence of an activator;
- optionally isolating compound (A); wherein
in the production of the indium chloride component, 1.5 to 3 equivalents, in particular 1.5 to 2.5 equivalents, of alkyl chloride per equivalent of indium are used.

29. Method according to one or more of claims 14 to 19 for producing trialkylindium having the formula R₃In, wherein R is an alkyl radical having 1 to 4 carbon atoms, and the alkyl radical can be branched or unbranched and can, in particular, be ethyl or methyl, with the steps of
- producing a compound (A) having the formula R₃In₂Cl₃ by reacting indium metal with an alkyl chloride having the formula RCI in the presence of an activator;
- optionally isolating compound (A);
- reacting compound (A) with an alkyl lithium to form lithium tetraalkylindate LiInR₄ and isolating and optionally further purifying the latter;
- reacting lithium tetraalkylindate LiInR₄ with an indium chloride compound to trialkylindium having the formula R₃In; wherein
in the production of compound (A), the alkyl chloride is added at a constant overpressure of from 1 bar to 4.5 bars, or from 1.5 bars to 4 bars, or from 2 bars to 3.5 bars, and the alkyl chloride is advantageously added by controlled introduction of gaseous alkyl chloride.

30. Method according to one or more of the preceding claims, in particular claims 1 to 13, for producing an indium chloride component having the general formula:
**RₐIn_{b}Cl_{c},**
wherein a is a number selected from 0, 1, 2, and 3, and b is a number selected from 1 and 2, and c is a number selected from 1, 2, and 3, and wherein a + b + c = 4 or a multiple of 4, the sum of a, b, and c particularly preferably being 4 or 8, wherein R is an alkyl radical having 1 to 4 carbon atoms, and the alkyl radical can be branched or unbranched and can, in particular, be ethyl or methyl, with the steps of
- producing a compound (A) having the formula R₃In₂Cl₃ by reacting indium metal with an alkyl chloride having the formula RCI in the presence of an activator;
- optionally isolating compound (A); wherein
in the production of the indium chloride component, the alkyl chloride is added at a constant pressure of from 1 bar to 4.5 bars, or from 1.5 bars to 4 bars, or from 2 bars to 3.5 bars, and the alkyl chloride is advantageously added by controlled introduction of gaseous alkyl chloride.

31. Method according to one or more of claims 14 to 19 for producing trialkylindium having the formula R₃In, wherein R is an alkyl radical having 1 to 4 carbon atoms, and the alkyl radical can be branched or unbranched and can, in particular, be ethyl or methyl, with the steps of
- producing a compound (A) having the formula R₃In₂Cl₃ by reacting indium metal with an alkyl chloride having the formula RCI in the presence of an activator;
- optionally isolating compound (A);
- reacting compound (A) with an alkyl lithium to form lithium tetraalkylindate LiInR₄ and isolating and optionally further purifying the latter;
- reacting lithium tetraalkylindate LiInR₄ with an indium chloride compound to trialkylindium having the formula R₃In; wherein
in the reaction of compound (A) with an alkyl lithium, 1 to 5 equivalents of alkyl lithium per equivalent of compound (A) are used.

32. Method according to one or more of claims 14 to 19 for producing trialkylindium having the formula R₃In, wherein R is a branched or unbranched alkyl radical having 1 to 4 carbon atoms and can, in particular, be ethyl or methyl, with the steps of
- producing a compound (A) having the formula R₃In₂Cl₃ by reacting indium metal with an alkyl chloride having the formula RCI in the presence of an activator;
- optionally isolating compound (A);
- reacting compound (A) with an alkyl lithium to form lithium tetraalkylindate LiInR₄ and isolating and optionally further purifying the latter;
- reacting lithium tetraalkylindate LiInR₄ with an indium chloride compound to trialkylindium having the formula R₃In;
- optionally purifying the obtained trialkylindium.

33. Method for the organometallic chemical vapor deposition (OMCVD) or organometallic vapor phase epitaxy (OMVPE) with the steps of
- providing compound (B) according to a method according to one of claims 14 to 19;
- subjecting compound (B) to a method for organometallic chemical vapor deposition (OMCVD) or organometallic vapor phase epitaxy (OMVPE).

34. Method for the organometallic chemical vapor deposition (OMCVD) or organometallic vapor phase epitaxy (OMVPE) with the steps of
- providing compound (C) according to a method according to one of claims 20 to 22;
- subjecting compound (C) to a method for organometallic chemical vapor deposition (OMCVD) or organometallic vapor phase epitaxy (OMVPE).

35. Compound (A), produced in accordance with a method according to one of claims 1 to 13.

## Revendications

1. Procédé de préparation d'un composé (A) de formule générale :
**R₃In₂Cl₃**
comprenant les étapes de réaction de
a1) réaction de l'indium avec un donneur d'alkyle en présence d'un activateur pour la formation du composé (A), le donneur d'alkyle étant le chlorure d'alkyle (RCl),
a2) et isolement facultatif du composé (A) à partir du mélange réactionnel ;
R représentant un radical alkyle comprenant 1 à 4 atomes de carbone et R étant ramifié ou non ramifié.

2. Procédé selon une des revendications précédentes, R représentant méthyle ou éthyle, en particulier méthyle.

3. Procédé selon une des revendications précédentes, l'activeur étant différent du chlore Cl₂, chlorure d'hydrogène HCl, l'hydrogène H₂, chlorure de fer FeCl₃, (PtCl₄)²⁻, PdCl₂, trichlorure d'indium (InCl₃), trichlorure d'aluminium (AlCl₃), chlorure de cuivre (CuCl₂), halogénure d'indium InX₃, (X représentant le chlore, le brome ou l'iode) et l'activateur étant différents des oxydes, en particulier de In₂O, TiO₂, NiO₂, Fe₂O₃ et leurs combinaisons.

4. Procédé selon une des revendications précédentes, l'activateur étant choisi parmi le chlorure de dialkylindium (R₂InCl), dichlorure d'alkylindium (RInCl₂), un mélange de trialkylindium (R₃In) et InCl₃, sesquichlorure d'alkylindium (R₃In₂Cl₃) et leurs mélanges et R représentant un radical alkyle comprenant 1 à 4 atomes de carbone et R étant ramifié ou non ramifié.

5. Procédé selon une ou plusieurs des revendications 1 à 4, dans lequel on utilise comme donneur d'alkyle du chlorure d'alkyle sous forme gazeuse.

6. Procédé selon une des revendications précédentes, dans lequel 1,5 à 5 équivalents, en particulier 1,5 à 2,9 équivalents donneurs d'alkyle par équivalent donneur d'indium sont utilisés.

7. Procédé selon une des revendications précédentes, dans lequel l'indium dans l'étape de réaction a1) est disposé dans le récipient de réaction et le donneur d'alkyle est ajouté ensuite.

8. Procédé selon la revendication 7, dans lequel l'ajout du donneur d'alkyle est réalisé à des températures supérieures à 20 °C et avec une surpression de 1 bar à 4,5 bar.

9. Procédé selon la revendication 7, dans lequel l'ajout du donneur d'alkyle est réalisé à des températures comprises entre -220 °C et 0 °C et dans lequel l'ajout est réalisé par condensation du donneur d'alkyle.

10. Procédé selon une des revendications précédentes, le procédé comprenant l'isolement du composé (A) comme étape a2) et l'isolement comprenant la séparation de composants secondaires liquides du mélange réactionnel se trouvant dans le récipient de réaction et le prélèvement ultérieur du composé (A) à partir du récipient de réaction.

11. Procédé selon une des revendications précédentes, dans lequel l'étape de réaction a1) est réalisée en l'absence de solvant organique.

12. Procédé selon une des revendications précédentes, dans lequel le rendement en composé (A) est d'au moins 79 %.

13. Procédé selon une des revendications précédentes, dans lequel la pureté du composé (A) est d'au moins 95 %.

14. Procédé de production d'un composé (B) de formule générale
**R₃In,**
comprenant les étapes de réaction de
b0) préparation facultative du composé (A) selon l'une des revendications 1 à 13;
b1) réaction du composé (A) avec un alkyllithium pour former le tétra-alkylindate de lithium (LiInR₄) et isolement du LiInR₄ à partir du mélange réactionnel et
b2) réaction du LiInR₄ avec un composant chlorure d'indium pour obtenir le composé (B)
dans lequel R est un résidu alkyle ramifié ou non ramifié avec 1 à 4 atomes de carbone.

15. Procédé selon la revendication 14, dans lequel le composant chlorure d'indium présente la formule générale :
**RₐIn_{b}Cl_{c}**
dans laquelle a est un nombre choisi parmi 0, 1, 2 et 3 et b est un nombre choisi parmi 1 et 2 et c est un nombre choisi parmi 1, 2 et 3 et dans laquelle a + b + c = 4 ou un multiple de 4 et dans laquelle R est un résidu alkyle avec 1 à 4 atomes de carbone et dans laquelle R est ramifié ou non ramifié.

16. Procédé selon une des revendications 14 ou 15, le composant de chlorure d'indium étant choisi parmi R₂InCl, R₃In₂Cl₃, RInCl₂ et InCl₃ et leurs mélanges.

17. Procédé selon une des revendications 14 ou 15, le composant de chlorure d'indium étant choisi parmi R₂InCl, R₃In₂Cl₃, RInCl₂ et leurs mélanges.

18. Procédé selon une des revendications précédentes, dans lequel le rendement en composé (B) est de plus de 90 %.

19. Procédé selon une des revendications 14 à 18, dans lequel la pureté du composé (B) est d'au moins 99 %.

20. Procédé de production d'un composé (C) de formule générale :
**R₂InR'**
comprenant les étapes de réaction supplémentaires suivantes :
c1) séparation du chlorure de dialkylindium à partir du composé (A), le chlorure de dialkylindium ayant la formule générale :
**R₂InCl,**
dans laquelle R est tel que défini ci-dessus ; et
c2) réaction du R₂InCl avec un agent alkylant pour former le composé (C)
R' étant un résidu nucléophile choisi dans le groupe constitué d'alkyle ramifié ou non ramifié et substitué ou non substitué, aryle ramifié ou non ramifié et substitué ou non substitué, qui peuvent être en particulier substitués par des groupes alkyle ou alcoxy ramifiés ou non ramifiés ou par des résidus amine.

21. Procédé selon la revendication 20, dans lequel l'agent alkylant est choisi parmi R'MgX, R'Li et R'₃Al.

22. Procédé selon l'une des revendications 20 ou 21, dans lequel R est le méthyle et dans lequel R' est un résidu Me₂N-(CH₂)₃ ou un résidu éthyle.

23. Procédé selon une ou plusieurs des revendications 14 à 19 pour la production de trialkylindium de formule R₃In, dans laquelle R est un résidu alkyle avec 1 à 4 atomes de carbone, le résidu alkyle pouvant être ramifié ou non ramifié et en particulier l'éthyle ou le méthyle, avec les étapes de
- production d'un composé (A) de formule R₃In₂Cl₃ par réaction de métal-indium avec un chlorure d'alkyle de formule RCl en présence d'un activateur ;
- facultativement isolement du composé (A) ;
- réaction du composé (A) avec un alkyllithium pour former du tétra-alkylindate de lithium LiInR₄ et isolement de celui-ci et facultativement nettoyage ultérieur ;
- réaction du tétra-alkylindate de lithium LiInR₄ avec un composé de chlorure d'indium en trialkylindium de formule R₃In ;
- facultativement nettoyage du trialkylindium obtenu.
dans lequel un composé (A) de formule R₃In₂Cl₃ est utilisé comme activateur, composé de chlorure d'indium ou pour leur combinaison.

24. Procédé selon une ou plusieurs des revendications 14 à 19 pour la production de trialkylindium de formule R₃In, dans laquelle R est un résidu alkyle avec 1 à 4 atomes de carbone, le résidu alkyle pouvant être ramifié ou non ramifié et en particulier l'éthyle ou le méthyle, avec les étapes de
- production d'un composé (A) de formule R₃In₂Cl₃ par réaction de métal-indium avec un chlorure d'alkyle de formule RCl en présence d'un activateur ;
- facultativement isolement du composé (A) ;
- réaction du composé (A) avec un alkyllithium pour former du tétra-alkylindate de lithium LiInR₄ et isolement de celui-ci et facultativement nettoyage ultérieur ;
- réaction du tétra-alkylindate de lithium LiInR₄ avec un composé de chlorure d'indium en trialkylindium de formule R₃In ; dans lequel
l'activateur est différent de l'halogénure d'indium InX₃, dans lequel X peut être le chlore, le brome ou l'iode, est différent du chlore Cl₂, chlorure d'hydrogène HCl, chlorure de fer FeCl₃, (PtCl₄)²⁻, PdCl₂, l'activateur étant différents des oxydes, en particulier de In₂O, TiO₂, NiO₂, Fe₂O₃.
- facultativement nettoyage du trialkylindium obtenu.

25. Procédé selon une ou plusieurs des revendications précédentes, en particulier les revendications 1 à 13, pour la production d'un composant chlorure d'indium de formule générale :
**RₐIn_{b}Cl_{c}**,
dans laquelle a est un nombre choisi parmi 0, 1, 2 et 3 et b est un nombre choisi parmi 1 et 2 et c est un nombre choisi parmi 1, 2 et 3 et dans laquelle a + b + c = 4 ou un multiple de 4, de manière particulièrement préférée la somme de a, b et c = 4 ou 8, dans laquelle R est un résidu alkyle avec 1 à 4 atomes de carbone, le résidu alkyle pouvant être ramifié ou non ramifié et en particulier l'éthyle ou le méthyle, avec les étapes de
- production d'un composé (A) de formule R₃In₂Cl₃ par réaction de métal-indium avec un chlorure d'alkyle de formule RCl en présence d'un activateur ;
- facultativement isolement du composé (A) ;
l'activateur est différent de l'halogénure d'indium InX₃, dans lequel X peut être le chlore, le brome ou l'iode, est différent du chlore Cl₂, chlorure d'hydrogène HCl, chlorure de fer FeCl₃, (PtCl₄)²⁻, PdCl₂, l'activateur étant différents des oxydes, en particulier de In₂O, TiO₂, NiO₂, Fe₂O₃ ; et dans lequel
le composant chlorure d'indium pouvant être en particulier : R₂InCl, R₃In₂Cl₃, RInCl₂ et des mélanges de ceux-ci ou en particulier Me₂InCl, Et₂InCl, MeInCl₂, EtInCl₂, Me₃In₂Cl₃ ou Et₃In₂Cl₃ (avec Et=éthyle et Me=méthyle).

26. Procédé selon une ou plusieurs des revendications 14 à 19 pour la production de trialkylindium de formule R₃In, dans laquelle R est un résidu alkyle avec 1 à 4 atomes de carbone, le résidu alkyle pouvant être ramifié ou non ramifié et en particulier l'éthyle ou le méthyle, comprenant un procédé de production d'un composant chlorure d'indium de formule générale :
**RₐIn_{b}Cl_{c}**
dans laquelle a est un nombre choisi parmi 0, 1, 2 et 3 et b est un nombre choisi parmi 1 et 2 et c est un nombre choisi parmi 1, 2 et 3 et dans laquelle a + b + c = 4 ou un multiple de 4, de manière particulièrement préférée la somme de a, b et c = 4 ou 8, dans laquelle R est un résidu alkyle avec 1 à 4 atomes de carbone, le résidu alkyle pouvant être ramifié ou non ramifié et en particulier l'éthyle ou le méthyle, avec les étapes de
- production d'un composé (A) de formule R₃In₂Cl₃ par réaction de métal-indium avec un chlorure d'alkyle de formule RCl en présence d'un activateur ;
- facultativement isolement du composé (A) ;
l'activateur est différent de l'halogénure d'indium InX₃, dans lequel X peut être le chlore, le brome ou l'iode, est différent du chlore Cl₂, chlorure d'hydrogène HCl, chlorure de fer FeCl₃, (PtCl₄)²⁻, PdCl₂, l'activateur étant différents des oxydes, en particulier de In₂O, TiO₂, NiO₂, Fe₂O₃ ; et dans lequel
le composant chlorure d'indium pouvant être en particulier : R₂InCl, R₃In₂Cl₃, RInCl₂ et des mélanges de ceux-ci ou en particulier Me₂InCl, Et₂InCl, MeInCl₂, EtInCl₂, Me₃In₂Cl₃ ou Et₃In₂Cl₃ (avec Et=éthyle et Me=méthyle).

27. Procédé selon une ou plusieurs des revendications 14 à 19 pour la production de trialkylindium de formule R₃In, dans laquelle R est un résidu alkyle avec 1 à 4 atomes de carbone, le résidu alkyle pouvant être ramifié ou non ramifié et en particulier l'éthyle ou le méthyle, avec les étapes de
- production d'un composé (A) de formule R₃In₂Cl₃ par réaction de métal-indium avec un chlorure d'alkyle de formule RCl en présence d'un activateur ;
- facultativement isolement du composé (A) ;
- réaction du composé (A) avec un alkyllithium pour former du tétra-alkylindate de lithium LiInR₄ et isolement de celui-ci et facultativement nettoyage ultérieur ;
- réaction du tétra-alkylindate de lithium LiInR₄ avec un composé de chlorure d'indium en trialkylindium de formule R₃In ; dans lequel
- lors de la production du composé (A), 1,5 à 3 équivalents, en particulier 1,5 à 2,5 équivalents chlorure d'alkyle par équivalent indium sont utilisés.

28. Procédé selon une ou plusieurs des revendications précédentes, en particulier les revendications 1 à 13, pour la production d'un composant chlorure d'indium de formule générale :
**RₐIn_{b}Cl_{c}**
dans laquelle a est un nombre choisi parmi 0, 1, 2 et 3 et b est un nombre choisi parmi 1 et 2 et c est un nombre choisi parmi 1, 2 et 3 et dans laquelle a + b + c = 4 ou un multiple de 4, de manière particulièrement préférée la somme de a, b et c = 4 ou 8, dans laquelle R est un résidu alkyle avec 1 à 4 atomes de carbone, le résidu alkyle pouvant être ramifié ou non ramifié et en particulier l'éthyle ou le méthyle, avec les étapes de
- production d'un composé (A) de formule R₃In₂Cl₃ par réaction de métal-indium avec un chlorure d'alkyle de formule RCl en présence d'un activateur ;
- facultativement isolement du composé (A) ;
lors de la production du composant chlorure d'indium, 1,5 à 3 équivalents, en particulier 1,5 à 2,5 équivalents chlorure d'alkyle par équivalent indium étant utilisés.

29. Procédé selon une ou plusieurs des revendications 14 à 19 pour la production de trialkylindium de formule R₃In, dans laquelle R est un résidu alkyle avec 1 à 4 atomes de carbone, le résidu alkyle pouvant être ramifié ou non ramifié et en particulier l'éthyle ou le méthyle, avec les étapes de
- production d'un composé (A) de formule R₃In₂Cl₃ par réaction de métal-indium avec un chlorure d'alkyle de formule RCl en présence d'un activateur ;
- facultativement isolement du composé (A) ;
- réaction du composé (A) avec un alkyllithium pour former du tétra-alkylindate de lithium LiInR₄ et isolement de celui-ci et facultativement nettoyage ultérieur ;
- réaction du tétra-alkylindate de lithium LiInR₄ avec un composé de chlorure d'indium en trialkylindium de formule R₃In ; dans lequel
lors de la production du composé (A), l'ajout du chlorure d'alkyle étant réalisé à une surpression constante de 1 bar à 4,5 bar ou 1,5 bar à 4 bar ou 2 bar à 3,5 bar et le chlorure d'alkyle étant avantageusement ajouté par introduction contrôlée de chlorure d'alkyle sous forme gazeuse.

30. Procédé selon une ou plusieurs des revendications précédentes, en particulier les revendications 1 à 13, pour la production d'un composant chlorure d'indium de formule générale :
**RₐIn_{b}Cl_{c}**
dans laquelle a est un nombre choisi parmi 0, 1, 2 et 3 et b est un nombre choisi parmi 1 et 2 et c est un nombre choisi parmi 1, 2 et 3 et dans laquelle a + b + c = 4 ou un multiple de 4, de manière particulièrement préférée la somme de a, b et c = 4 ou 8, dans laquelle R est un résidu alkyle avec 1 à 4 atomes de carbone, le résidu alkyle pouvant être ramifié ou non ramifié et en particulier l'éthyle ou le méthyle, avec les étapes de
- production d'un composé (A) de formule R₃In₂Cl₃ par réaction de métal-indium avec un chlorure d'alkyle de formule RCl en présence d'un activateur ;
- facultativement isolement du composé (A) ;
lors de la production du composant chlorure d'indium, l'ajout du chlorure d'alkyle étant réalisé à une pression constante de 1 bar à 4,5 bar ou 1,5 bar à 4 bar ou 2 bar à 3,5 bar et le chlorure d'alkyle étant avantageusement ajouté par introduction contrôlée de chlorure d'alkyle sous forme gazeuse.

31. Procédé selon une ou plusieurs des revendications 14 à 19 pour la production de trialkylindium de formule R₃In, dans laquelle R est un résidu alkyle avec 1 à 4 atomes de carbone, le résidu alkyle pouvant être ramifié ou non ramifié et en particulier l'éthyle ou le méthyle, avec les étapes de
- production d'un composé (A) de formule R₃In₂Cl₃ par réaction de métal-indium avec un chlorure d'alkyle de formule RCl en présence d'un activateur ;
- facultativement isolement du composé (A) ;
- réaction du composé (A) avec un alkyllithium pour former du tétra-alkylindate de lithium LiInR₄ et isolement de celui-ci et facultativement nettoyage ultérieur ;
- réaction du tétra-alkylindate de lithium LiInR₄ avec un composé de chlorure d'indium en trialkylindium de formule R₃In ; dans lequel
lors de la réaction du composé (A) avec un alkyllithium, 1 à 5 équivalents alkyllithium par équivalent composé (A) sont utilisés.

32. Procédé selon une ou plusieurs des revendications 14 à 19 pour la production de trialkylindium de formule R₃In, dans laquelle R est un résidu alkyle ramifié ou non ramifié avec 1 à 4 atomes de carbone et en particulier l'éthyle ou le méthyle, avec les étapes de
- production d'un composé (A) de formule R₃In₂Cl₃ par réaction de métal-indium avec un chlorure d'alkyle de formule RCl en présence d'un activateur ;
- facultativement isolement du composé (A) ;
- réaction du composé (A) avec un alkyllithium pour former du tétra-alkylindate de lithium LiInR₄ et isolement de celui-ci et facultativement nettoyage ultérieur ;
- réaction du tétra-alkylindate de lithium LiInR₄ avec un composé de chlorure d'indium en trialkylindium de formule R₃In ;
- facultativement nettoyage du trialkylindium obtenu.

33. Procédé pour le dépôt chimique métallo-organique en phase gazeuse (MOCVD) ou l'épitaxie métallo-organique en phase gazeuse (MOVPE) présentant les étapes de
- préparation du composé (B) selon un procédé selon une des revendications 14 à 19 ;
- soumission du composé (B) à un procédé pour le dépôt chimique métallo-organique en phase gazeuse (MOCVD) ou l'épitaxie métallo-organique en phase gazeuse (MOVPE).

34. Procédé pour le dépôt chimique métallo-organique en phase gazeuse (MOCVD) ou l'épitaxie métallo-organique en phase gazeuse (MOVPE) présentant les étapes de
- préparation du composé (C) selon un procédé selon une des revendications 20 à 22 ;
- soumission du composé (C) à un procédé pour le dépôt chimique métallo-organique en phase gazeuse (MOCVD) ou l'épitaxie métallo-organique en phase gazeuse (MOVPE).

35. Composé (A), préparé selon un procédé selon une des revendications 1 à 13.
